# EUROPÄISCHE PATENTSCHRIFT

(11) **EP 4 230 884 B1**
(45) Veröffentlichungstag und Bekanntmachung des Hinweises auf die Patenterteilung: **05.02.2025**
(21) Anmeldenummer: 22211174.2
(22) Anmeldetag: 02.12.2022
(51) Int. Cl.: F16B 31/02, F16B 5/02

(54) **SENSORISCHE VERMESSUNG VERBUNDENER BAUWERKSEGMENTE MITTELS SENSOR AN BEFESTIGUNGSELEMENT**
SENSOR MEASUREMENT OF CONNECTED BUILDING SEGMENTS BY MEANS OF A SENSOR ON A FASTENING ELEMENT
MESURE SENSORIELLE DE SEGMENTS DE CONSTRUCTION CONNECTÉS AU MOYEN D'UN CAPTEUR SUR UN ÉLÉMENT DE FIXATION

(30) Priorität: 16.02.2022 DE 102022103656
(43) Veröffentlichungstag der Anmeldung: 23.08.2023
(73) Patentinhaber: Adolf Würth GmbH & Co. KG, 74653 Künzelsau (DE); Würth International AG, 7000 Chur (CH)
(72) Erfinder: Wolz, Nicolas, 63927 Bürgstadt (DE); Tiedemann, Benjamin, 74653 Künzelsau (DE); Röck, David, 86169 Augsburg (DE); Heiko, Rosskamp, 73099 Adelberg (DE)
(74) Vertreter: Dilg, Haeusler, Schindelmann Patentanwaltsgesellschaft mbH

(56) Entgegenhaltungen:
- EP-A1- 3 734 064
- WO-A1-2021/010263
- US-A1- 2014 283 617
- US-A1- 2020 200 007

## Beschreibung

Die Erfindung betrifft eine Bauwerkanordnung und ein Verfahren zum Herstellen einer Bauwerkanordnung.

Es sind verschiedene Befestigungselemente bekannt, die in einem Verankerungsgrund gesetzt werden können, zum Beispiel um ein Bauteil an dem Verankerungsgrund zu befestigen. Beispiele für solche Befestigungselemente sind Holzschrauben, Bolzenanker und Dübel.

DE 10 2009 007 425 B3 offenbart einen Sensorbolzen zur Krafterfassung. Der Sensorbolzen weist ein Sensorelement aus einem Material mit in Abhängigkeit von äußeren Krafteinwirkungen veränderlichen Lichtdurchlasseigenschaften auf, das in einem Lichtstrahlengang zwischen einer Lichtquelle und einem Lichtempfänger angeordnet ist. Das Sensorelement steht mit einer Kraftaufnahmeeinrichtung in mechanischer Wirkverbindung. Das Sensorelement kann zwischen einem Hauptschalenteil und einem Formschalenteil eingelegt werden, das durch Lagerschalen gesichert ist. Durch das Sensorelement wird ein Lichtstrahl einer in einer Endkappe angeordneten Lichtquelle gesendet und von einem in einem Gehäuse angeordneten Lichtempfänger erfasst. Bei einer Belastung des Formschalenteils durch eine äußere Kraft verformt sich der Epoxidkern des Sensorelements und der Lichtdurchlass wird verringert. Die Veränderung des Lichtsignals kann durch den Lichtempfänger erfasst und durch eine nachgeschaltete Signalverarbeitungseinrichtung ausgewertet werden.

DE 10 2014 112 151 B4 offenbart eine elektronische Schraube. Die elektronische Schraube umfasst einen Körper und ein Drehmomentsensorelement. Der Körper umfasst einen Schraubkopf, einen Schaft, welcher mit dem Schraubkopf verbunden ist, und eine Vertiefung, die sich an der Seitenwand des Schafts befindet. Das Drehmomentsensorelement ist in der Vertiefung angeordnet und misst den Drehmomentwert der elektronischen Schraube. Das Drehmomentsensorelement ist elektrisch mit einer elektronischen Drehmomentanzeige verbunden, wobei die elektronische Drehmomentanzeige den durch das Drehmomentsensorelement ermittelten Drehmomentwert anzeigt.

US 2014/283617 A1 offenbart eine Bauwerksanordnung mit einem Befestigungselement und einem Sensor zum Erfassen von Verankerungsdaten.

Es ist eine Aufgabe der vorliegenden Erfindung, die Zuverlässigkeit einer Verbindung zwischen Bauwerksegmenten in einfacher und präziser Weise überwachen zu können.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Im Rahmen der vorliegenden Anmeldung kann unter dem Begriff "Bauwerkanordnung" eine errichtete Konstruktion verstanden werden, die aus zwei oder mehr miteinander verbundenen Bauwerksegmenten zusammengesetzt ist. Insbesondere kann eine solche Bauwerkanordnung nur schwer von einem Untergrund lösbar ausgebildet sein, zum Beispiel als Gebäude oder Tunnel. Es ist aber auch möglich, eine Bauwerkanordnung als aus mehreren Bauwerksegmenten zusammengesetzte bewegliche Vorrichtung auszubilden, zum Beispiel als Regal.

Im Rahmen der vorliegenden Anmeldung kann unter dem Begriff "Bauwerksegmente" insbesondere mindestens zwei Elemente einer Bauwerkanordnung verstanden werden, die direkt oder indirekt miteinander verbunden sein können. Solche Bauwerksegmente können insbesondere Teile einer Wand, einer Brücke oder eines anderen Bauwerks oder Gebäudes bilden. Es ist auch möglich, dass die Bauwerksegmente durch zwei Bauteile gebildet sind, beispielsweise durch zwei zu verbindende Balken. Auch eine Seitenwand und ein horizontales Ablagefach eines Regals können Bauwerksegmente einer als Regal ausgebildeten Bauwerkanordnung sein. Materialien für Bauwerksegmente sind insbesondere Holz oder Holzbaustoffe, oder aber auch Beton- und Mauerwerksbaustoffe, Metall oder Kunststoffbauteile. Ferner können Bauwerksegmente auch aus einem beliebigen Kompositwerkstoff aus mehreren unterschiedlichen Materialkomponenten hergestellt sein. Die Bauwerksegmente können Hohlräume aufweisen oder können massiv (d.h. von Hohlräumen frei) sein.

Im Rahmen der vorliegenden Anmeldung kann unter dem Begriff "zueinander benachbarte Bauwerksegmente" insbesondere Bauwerksegmente in einem derart geringen gegenseitigen Abstand verstanden werden, dass diese mittels eines gemeinsamen Befestigungselements miteinander befestigt werden können. Somit kann ein Abstand zwischen benachbarten Bauwerksegmenten kleiner als eine maximale Dimension eines diese Bauwerksegmente befestigenden Befestigungselements sein. Insbesondere können benachbarte Bauwerksegmente direkt einander angrenzen, d.h. mit Berührkontakt. Es ist aber auch möglich, dass die beiden Bauwerksegmente durch einen anderen Körper voneinander beabstandet werden.

Im Rahmen der vorliegenden Anmeldung kann unter dem Begriff "Befestigungselement" insbesondere ein Körper, ein Bauteil oder eine Baugruppe aus mehreren Bauteilen verstanden werden, geeignet zum Befestigen mehrerer Bauwerksegmente aneinander und/oder an einem Verankerungsgrund. Insbesondere kann mittels eines solchen Befestigungselements ein erstes Bauwerksegment (zum Beispiel ein erster Tübbing oder ein erster Holzbalken) an einem benachbarten zweiten Bauwerksegment (zum Beispiel einem zweiten Tübbing oder einem zweiten Holzbalken) befestigt werden.

Im Rahmen der vorliegenden Anmeldung kann unter dem Begriff "Schaftabschnitt" insbesondere ein im Wesentlichen zylindrischer, bolzenförmiger oder stabförmiger Körper verstanden werden, der zum Beispiel aus einem Metall oder einem Kunststoff hergestellt sein kann. Ein solcher Schaftabschnitt kann ein hohler oder ein massiver Körper sein, an und/oder in dem einer oder mehrere funktionelle Abschnitte ausgebildet sein.

Im Rahmen der vorliegenden Anmeldung kann unter dem Begriff "erstes Befestigungsende" insbesondere ein Endabschnitt des Schaftabschnitts oder an dem Schaftabschnitt verstanden werden, der zum Verankern in oder zum Anbringen an dem ersten Bauwerksegment funktionell ausgebildet ist. Dies kann das erste Befestigungsende allein (beispielsweise durch ein Verankerungsgewinde oder einen Konuskörper mit Spreizhülse) oder in Zusammenwirkung mit mindestens einem anderen Körper oder Element (zum Beispiel einem separaten Spreizkörper oder chemischer Dübelmasse, wie zum Beispiel Mörtel) bewerkstelligen.

Im Rahmen der vorliegenden Anmeldung kann unter dem Begriff "zweites Befestigungsende" ein Endabschnitt des Schaftabschnitts oder an dem Schaftabschnitt verstanden werden, der im gesetzten Zustand an und/oder in einem zweiten Bauwerksegment angeordnet sein kann. Insbesondere kann das zweite Befestigungsende funktionell zum Befestigen von zwei Bauwerksegmenten aneinander ausgebildet sein, beispielsweise mit einem Gewinde.

Im Rahmen der vorliegenden Anmeldung kann unter dem Begriff "Sensor" jede funktionelle Entität verstanden werden, mit der Sensorinformation während des Setzens und/oder nach dem Setzen (insbesondere auch lange nach dem Setzen, zum Beispiel Jahre später) des Befestigungselements sensorisch erkennbar und zur Auswertung übermittelbar ist. Zum Beispiel kann ein solcher Sensor eine einstückige Komponente sein, die Sensordaten (insbesondere Verankerungsdaten) erfasst und als Signal (beispielsweise elektrisch, optisch, elektromagnetisch, etc.) weiterleitet. Es ist auch möglich, dass ein Sensor aus mehreren funktionell zusammenwirkenden Sensorkomponenten gebildet ist. Sensoren können zum Erfassen von mindestens einem physikalischen und/oder chemischen Parameter ausgebildet sein, zum Beispiel Druck, Temperatur, mechanische Spannung, Drehmoment, Kraft, chemische Umgebung, Untergrundbeschaffenheit, etc. Gemäß einem exemplarischen Ausführungsbeispiel der Erfindung kann als der mindestens eine Sensor zum Beispiel ein Dehnmessstreifen, ein Feuchtigkeitssensor, ein Schwingungssensor, ein Ultraschallsensor, ein induktiver Sensor und/oder ein kapazitiver Sensor eingesetzt werden.

Im Rahmen der vorliegenden Anmeldung kann unter dem Begriff "Verankerungsdaten" insbesondere jeder Parameter verstanden werden, der für einen Verankerungsvorgang und/oder einen Verankerungszustand und/oder einen Verankerungserfolg oder -misserfolg und/oder für eine entsprechende Änderung über die Zeit hinweg indikative Information bereitstellt. Sensorisch erfasste Verankerungsdaten können über einen oder über mehrere Parameter Aufschluss geben. Wenn solche Verankerungsdaten, insbesondere einmalig, regelmäßig oder unregelmäßig wiederkehrend oder kontinuierlich, an eine Übermittlungseinrichtung übermittelt werden, kann anhand der Verankerungsdaten ein korrektes Setzen des Befestigungselements in dem benachbarte Bauwerksegmente aufweisenden Verankerungsgrund oder ein Problem oder ein Misserfolg im Zusammenhang mit dem Setzen des Befestigungselements in den benachbarten Bauwerksegmenten ermittelt und erkannt werden. Auch können langfristige Veränderungen der Verankerungskraft des Befestigungselements in den benachbarten Bauwerksegmenten sensorisch erkannt werden.

Gemäß einem exemplarischen Ausführungsbeispiel der Erfindung ist eine Bauwerkanordnung geschaffen, deren strukturelle Integrität insbesondere an einer Schnittstelle zwischen benachbarten Bauwerksegmenten mittels mindestens eines benachbarte Bauwerksegmente überbrückenden Befestigungselements im gesetzten Zustand zuverlässig überwacht werden kann. Zu diesem Zweck wird ein Befestigungselement zwischen den besagten benachbarten Bauwerksegmenten eingesetzt, um diese miteinander zu verbinden. Ferner wird das Befestigungselement mit einem Sensor ausgestattet, der im gesetzten Zustand für die Verankerung des Befestigungselements in den Bauwerksegmenten indikative Sensorinformation liefern kann. Unter Einsatz einer Übermittlungseinrichtung können Sensordaten (zum Beispiel elektrisch, optisch oder elektromagnetisch) vom Setzort des Sensors an ein Äußeres der Bauwerkanordnung zur Weiterverarbeitung oder Auswertung übermittelt werden. Auf diese Weise kann insbesondere für schwer zugängliche Bauwerkanordnungen, wie zum Beispiel einen Tunnel oder eine Brücke, im Betrieb fortwährend Sensorinformation abgerufen werden, die mögliche Stabilitätsprobleme in der Statik der aus mehreren Bauwerksegmenten aufgebauten Bauwerkanordnung anzeigt.

Im Weiteren werden zusätzliche exemplarische Ausführungsbeispiele der Bauwerkanordnung und des Verfahrens beschrieben.

Gemäß einem exemplarischen Ausführungsbeispiel kann die Bauwerkanordnung eine Vielzahl (insbesondere mindestens fünf) von paarweise benachbarten Bauwerksegmenten und eine Vielzahl von (insbesondere mindestens vier) benachbarte Bauwerksegmente paarweise miteinander befestigenden Befestigungselementen aufweisen, von denen jedes mit einem Sensor und einer Übermittlungseinrichtung zum Bereitstellen von setzortspezifischen Verankerungsdaten an das externe Empfängergerät ausgebildet ist. Gemäß einer solchen Ausgestaltung kann die aus vielen Bauwerksegmenten komplex aufgebaute Bauwerkanordnung von einer Vielzahl von Befestigungselementen mit den oben beschriebenen Merkmalen durchsetzt sein, wobei jedes Befestigungselement zwei zugeordnete Bauwerksegmente aneinander befestigt. Auf diese Weise kann ein komplexes Netzwerk von Befestigungselementen in einer komplexen Bauwerkanordnung bereitgestellt werden, um ortsaufgelöste Informationen über eine mögliche lokale mechanische Schwächung in der komplexen Bauwerkanordnung zu erhalten. Beispielsweise kann die Bauwerkanordnung ein Tunnel mit einer Vielzahl von Tübbingen sein. Dann können jeweils zwei miteinander direkt verbundene Tübbinge an einer gegenseitigen Schnittstelle mit einem jeweiligen Befestigungselement versehen werden, das sich teils in dem einen und teils in dem anderen Tübbing oder anderen Bauwerksegment erstreckt. Kommt es im Betrieb der Bauwerkanordnung (zum Beispiel des Tunnels) zu einer mechanischen Schwächung an einer Nahtstelle zwischen zwei bestimmten Bauwerksegmenten (beispielsweise Tübbingen), kann dies durch die von dem Sensor des betreffenden Befestigungselements erfassten Sensordaten zuverlässig erfasst werden. Eine Übermittlungseinrichtung kann solche Daten an ein externes Empfängergerät übermitteln, das dann die mechanische Schwachstelle in der Bauwerkanordnung lokalisieren kann. Auf diese Weise kann schnell und zielgerichtet eine Wartung, eine Reparatur oder eine sonstige Maßnahme an einer identifizierten kritischen Position vorgenommen werden. Eine solche Sensoranordnung kann besonders vorteilhaft unter harschen Umgebungsbedingungen eingesetzt werden, unter denen die mechanische Festigkeit zwischen Bauwerksegmenten einer Bauwerkanordnung ansonsten schwierig zu bestimmen ist (wie zum Beispiel in einem Tunnel oder einer Brücke).

Alternativ oder ergänzend ist es auch möglich, zwei benachbarte Bauwerksegmente mit mehreren Befestigungselementen zu verbinden und/oder ein Befestigungselement mit mindestens drei Bauwerksegmenten zu befestigen.

Gemäß einem exemplarischen Ausführungsbeispiel kann der Sensor in einem Grenzbereich zwischen dem ersten Bauwerksegment und dem zweiten Bauwerksegment positioniert sein, um Verankerungsdaten an einem Übergang zwischen dem ersten Bauwerksegment und dem zweiten Bauwerksegment zu erfassen. Beispielsweise kann sich der Sensor teilweise in dem ersten Bauteilsegment und teilweise in dem zweiten Bauteilsegment befinden, um Informationen über die mechanische Festigkeit an einer Grenze zwischen dem ersten Bauwerksegment und dem zweiten Bauwerksegment erfassen zu können. Gemäß dieser vorteilhaften Ausgestaltung kann der Sensor somit nicht nur für die Stabilität innerhalb eines jeweiligen Bauwerksegments indikative Informationen, sondern für die Stabilität an einem Übergang zwischen aneinander angrenzenden Bauwerksegmenten indikative Information ermitteln.

Der Sensor ist an einem radial verjüngten Verjüngungsabschnitt des Schaftabschnitts axial zwischen dem ersten Befestigungsende und dem zweiten Befestigungsende angeordnet.

Bevorzugt erstreckt sich der verjüngte Verjüngungsabschnitt teilweise in dem einen und teilweise in dem anderen der beiden benachbarten Bauwerksegmente. Dadurch kann mechanische Schnittstelleninformation erhalten werden. Im Rahmen der vorliegenden Anmeldung kann unter dem Begriff "radial verjüngter Verjüngungsabschnitt" insbesondere ein axial zentraler Bereich des Schaftabschnitts verstanden werden, der eine geringere Radialausdehnung hat als ein jeweils angrenzender anderer Bereich des Schaftabschnitts. Der radial verjüngte Verjüngungsabschnitt kann hierbei so bemessen sein, dass er einen radial zurückversetzten Aufnahmeraum für mindestens einen Sensor bildet, so dass der mindestens eine Sensor beim Setzen des Befestigungselements vor einer mechanischen Beschädigung durch eine unerwünschte Wechselwirkung mit einer Wandung des Verankerungsgrunds aus den benachbarten Bauwerksegmenten geschützt ist. Der radiale Verjüngungsabschnitt kann auch einen mechanisch schwächsten Abschnitt des Befestigungselements bilden, da er aufgrund seiner Verjüngung besonders anfällig für Verbiegung und/oder Zugspannungen sein kann. Daher eignet sich der Verjüngungsabschnitt besonders gut zum Anordnen des Sensors, da dieser an dieser Position bei Einwirken einer Last ein besonders starkes Sensorsignal erfassen kann.

Die Bauwerkanordnung weist eine Schutzeinrichtung zum Schützen des Sensors auf.

Im Rahmen der vorliegenden Anmeldung kann unter dem Begriff "Schutzeinrichtung" eine körperliche Struktur verstanden werden, die mindestens einen in dem Verjüngungsabschnitt untergebrachten Sensor einen Schutz vor insbesondere mechanischer Beschädigung durch Umgebungsmaterial in dem aus dem benachbarten Bauwerksegmenten gebildeten Verankerungsgrund liefert, ohne die Sensorfunktion oder Sensorgenauigkeit hierbei zu beeinträchtigen. Der Schutz vor Beeinträchtigung kann hierbei insbesondere einen Schutz vor mechanischer Beschädigung beim und/oder nach dem Setzen des Befestigungselements in den Bauwerksegmenten bezeichnen, aber auch eine unerwünschte Wechselwirkung mit einem gasförmigen, flüssigen und/oder festen Medium beim Setzen und/oder nach dem Setzen des Befestigungselements in den Bauwerksegmenten bezeichnen. Eine solche Wechselwirkung kann mit Material der Bauwerksegmente oder mit einem Hilfsmaterial (wie zum Beispiel einem Epoxidharz oder Mörtel im Falle eines chemischen Dübels) in einem Umgebungsbereich des Befestigungselements erfolgen. Somit kann ein Befestigungselement bereitgestellt werden, das mindestens einen Sensor aufweist, der in einem verjüngten Schaftbereich geschützt untergebracht werden kann. Ein derart vorgesehener Sensor kann zum Erfassen mindestens eines Verankerungsparameters oder anderer Verankerungsdaten beim Setzen und/oder nach dem Setzen des Befestigungselements in einem aus benachbarten Bauwerksegmenten gebildeten Verankerungsgrund ausgebildet und konfiguriert sein. Durch das Anordnen des mindestens einen Sensors in dem radial zurückversetzten Verjüngungsabschnitt des Befestigungselements kann eine Beschädigung des mindestens einen Sensors beim Setzen des Befestigungselements zuverlässig vermieden werden, beispielsweise beim Einschlagen eines Bolzenankers in ein Verankerungsloch in einem beispielsweise aus Beton gebildeten Paar von Bauwerksegmenten. Auch kann ein solches radiales Zurückversetzen des Sensors diesen davor schützen, dass von den Bauwerksegmenten mantelseitige Kräfte auf den Sensor übertragen werden, welche die eigentlich zu erfassenden Sensordaten verfälschen können. Als besonders vorteilhaft hat es sich erwiesen, den zumindest teilweise in dem Verjüngungsabschnitt angeordneten Sensor zusätzlich mit einer Schutzeinrichtung auszustatten (insbesondere zu bedecken), welche die sensorische Aktivität des Sensors ungestört aufrechterhält und dennoch den Sensor vor Beschädigung oder sogar Zerstörung beim Setzen oder im Betrieb des Befestigungselements schützt. Auf diese Weise ist es möglich, einen Sensor an einer Position von Interesse anzubringen, die sich im gesetzten Zustand im Inneren der Bauwerksegmente befindet. Spezifisch an diesem präzise auswählbaren Ort von Interesse können dann Verankerungsdaten von dem gesetzten Sensor aus den verbundenen Bauwerksegmenten heraus übermittelt werden. Ein Benutzer erhält somit eine sensorische Rückmeldung, die den Erfolg und/oder Misserfolg eines Verankerungsprozesses anzeigt und einem Benutzer daher die Überprüfung der Korrektheit des Setzvorgangs ermöglicht. Alternativ oder ergänzend kann der an dem Befestigungselement integrierte mindestens eine Sensor auch nach - und sogar Jahre nach - Setzen des Befestigungselements Informationen über den Setzzustand liefern, beispielsweise eine Verringerung oder einen Verlust von Befestigungs- oder Setzkraft des Befestigungselements in den Bauwerksegmenten erkennbar machen. Eine solche reduzierte Verankerungskraft kann beispielsweise nach einem längeren Zeitraum in einem Gebäude (zum Beispiel einer Brücke) auftreten, in dem ein Dübel oder Bolzenanker gesetzt worden ist. Eine kritische Verringerung der Setzkraft kann daher ausreichend lange vor einem Versagensfall erkannt werden, sodass rechtzeitig Gegenmaßnahmen ergriffen werden können.

Gemäß einem exemplarischen Ausführungsbeispiel kann der Sensor zum Erfassen von Verankerungsdaten ausgebildet sein, die relative Information und/oder absolute Information betreffend einen Messparameter enthalten. Relative Information betreffend einen Messparameter kann beispielsweise die Information sein oder beinhalten, dass sich der Messparameter verändert hat, ob er größer oder kleiner geworden ist, etc. Absolute Information betreffend einen Messparameter kann quantitativ angeben, auf welchen Wert oder um welche Wertedifferenz sich ein Messparameter verändert hat.

Gemäß einem exemplarischen Ausführungsbeispiel kann das erste Bauwerksegment und/oder das zweite Bauwerksegment aus einer Gruppe ausgewählt sein, die besteht aus einem Betonsegment, einem Holzsegment, einem Metallsegment und einem Tübbing. Beispielsweise kann ein Befestigungselement in einander angrenzende Betonplatten eingebracht werden, die zum Beispiel an einer Ecke einer Betonwand aneinander angrenzen. Es ist aber auch möglich, ein jeweiliges Befestigungselement an aneinander angrenzenden Holzbalken anzubringen, die miteinander verbunden werden sollen (zum Beispiel eine Sparre und eine Pfette an einer Dachkonstruktion). Auch in der Verbindung von Metallsegmenten einer Maschine (zum Beispiel eines Schienenfahrzeugs) oder eines Bauwerks (zum Beispiel eines Turms) kann ein Befestigungselement angebracht werden. Tübbinge sind (insbesondere gekrümmte) Bauteile der Außenschale eines Schachtes oder Tunnels, die ebenfalls mittels eines Befestigungselements miteinander verbunden werden können.

Gemäß einem exemplarischen Ausführungsbeispiel kann die Bauwerkanordnung als Gebäude, Brücke, Tunnel, Fahrbahn, Schutzzaun und/oder Regal ausgebildet sein. Andere Bauwerkanordnungen sind möglich.

Gemäß einem exemplarischen Ausführungsbeispiel kann die Übertragungseinrichtung mindestens ein Übertragungskabel aufweisen, das zumindest abschnittsweise entlang des Schaftabschnitts verlaufend angeordnet ist. Gemäß einer solchen Ausgestaltung kann kabelgebunden Sensorinformation vom Sensor an eine Zielentität beziehungsweise eine Empfängereinrichtung übermittelt werden. Dies stellt eine einfache und fehlerrobuste Lösung dar. Ein solches Übertragungskabel kann zum Beispiel außen entlang des Schaftabschnitts (zum Beispiel versenkt in einem weiteren verjüngten Bereich, zum Beispiel einer Nut) oder im Inneren des Schaftabschnitts geführt werden.

Gemäß einem exemplarischen Ausführungsbeispiel kann die Übertragungseinrichtung zum drahtlosen Übertragen der Verankerungsdaten ausgebildet sein, insbesondere mittels zumindest einer Technologie aus einer Gruppe bestehend aus Near Field Communication (NFC), Bluetooth, Wireless Local Area Network (WLAN), Narrowband Internet of Things (NB-IoT), Long Term Evolution (LTE) und Low Power Wide Area Network (LPWAN). Gemäß einer solchen Ausgestaltung können für den Sensor Daten drahtlos vom Inneren der Bauwerksegmente bis zu einem Äußeren der Bauwerksegmente zur Weiterverarbeitung oder Auswertung an ein Empfängergerät übertragen werden. Kabel können dann zumindest abschnittsweise mit Vorteil entbehrlich sein. Zum Beispiel kann die Übermittlung unter Verwendung von Funkwellen einer geeigneten Frequenz, insbesondere im Hochfrequenzbereich, übertragen werden.

Gemäß einem exemplarischen Ausführungsbeispiel kann der Sensor zum Erfassen von zumindest einem Parameter aus einer Gruppe ausgebildet sein, die besteht aus Temperatur, Zugspannung, Dehnung und Drehmoment. Beispielsweise kann eine von einer Soll-Temperatur oder einem Soll-Temperaturbereich abweichende Ist-Temperatur des Sensors beim Setzen oder danach auf Probleme durch übermäßige Reibung oder Kraftübertragung hindeuten. Eine exzessive Dehnung des Schaftabschnitts beim Setzen oder danach kann zum Beispiel mittels eines Dehnmessstreifens oder eines anderen entsprechend ausgebildeten Sensors erkannt werden. Auch eine solche übermäßige Dehnung kann auf Probleme beim Setzen, beispielsweise ein Verkeilen des Befestigungselements in den Bauwerksegmenten, hindeuten. Auch ein Drehmoment während des Setzens oder danach kann den Erfolg oder Misserfolg des Setzvorgangs dokumentieren und einem Benutzer eine entsprechende Information geben. Dadurch kann die Zuverlässigkeit der Beurteilung eines Setzvorgangs durch einen Benutzer insbesondere bei sicherheitskritischen Anwendungen sichergestellt werden.

Gemäß einem exemplarischen Ausführungsbeispiel kann der Sensor einen Dehnmessstreifen aufweisen. Bevorzugt kann der Sensor also als DMS-Sensor ausgebildet sein und eine Dehnung an dem Schaftabschnitt während und/oder nach dem Setzen detektieren. Dadurch können zum Beispiel kritische Zugspannungen zuverlässig erkannt werden. Diese Information hat sich als besonders wertvoll für die Beurteilung des Setzerfolgs erwiesen. Darüber hinaus kann ein Dehnmessstreifen problemlos in einem Verjüngungsabschnitt des Schaftabschnitts angebracht werden. Auch bei Bedeckung durch eine Schutzeinrichtung, zum Beispiel einen kompressiblen Schaum, kann die Funktionsfähigkeit eines Dehnmessstreifens aufrechterhalten bleiben, um Dehnungen des Schaftabschnitts präzise und fehlerrobust sensorisch zu erfassen.

Gemäß einem exemplarischen Ausführungsbeispiel kann das Befestigungselement zumindest einen weiteren Sensor zum Erfassen von weiteren Verankerungsdaten des Befestigungselements in dem ersten Bauwerksegment und/oder dem zweiten Bauwerksegment aufweisen. Somit ist es auch möglich, mehrere Sensoren an dem Befestigungselement zu integrieren. Dies kann dann zum Beispiel eine ortsaufgelöste Messung eines Verankerungsparameters ermöglichen, zum Beispiel durch mehrere Dehnmessstreifen, die entlang eines Umfangs und/oder entlang einer axialen Richtung des Schaftabschnitts des Befestigungselements angeordnet sind. Alternativ oder ergänzend können die mehreren Sensoren aber auch unterschiedliche (insbesondere komplementäre) Parameter erfassen, beispielsweise Dehnung und Temperatur. Dies erlaubt eine Verfeinerung des Rückschlusses des Setzergebnisses.

Gemäß einem exemplarischen Ausführungsbeispiel kann die Schutzeinrichtung feuchtigkeitsundurchlässiges Material aufweisen, insbesondere einen feuchtigkeitsundurchlässigen Schaum. Wenn die Schutzeinrichtung aus einem feuchtigkeitsundurchlässigen Material ausgebildet ist, kann selbst ein feuchtigkeitsempfindlicher Sensor des Befestigungselements auch in feuchter Umgebung (zum Beispiel in feuchtem Mauerwerk) störungsfrei die Verankerungsdaten erfassen.

Gemäß einem exemplarischen Ausführungsbeispiel kann die Schutzeinrichtung ein aromatisches Isocyanat aufweisen. Isocyanat hat sich als besonders wirksam erwiesen, gleichzeitig eine Kompressibilität als auch eine mechanische Schutzfunktion bereitzustellen, die den Sensor vor Artefakten bewahrt und dessen Empfindlichkeit aufrechterhält. Außerdem ist ein solches Material flüssigkeitsundurchlässig und erlaubt somit einen Einsatz des Befestigungselements samt Sensor in feuchter Umgebung.

Die Schutzeinrichtung ist umfänglich geschlossen in dem radial verjüngten Verjüngungsabschnitt angeordnet. Somit ist die Schutzeinrichtung selbst als ringförmiger Körper ausgebildet, der in einer ringförmigen Aussparung des Schaftabschnitts angeordnet ist, die den Verjüngungsabschnitt bildet. Dies fördert zum einen ein zuverlässiges Verbleiben der Schutzeinrichtung an Ort und Stelle und vermeidet überdies die Erzeugung übermäßiger Reibungskräfte beim Setzen des Befestigungselements, da die ringförmige Schutzeinrichtung dann nicht über den Verjüngungsabschnitt in radialer Richtung übersteht.

Gemäß einem exemplarischen Ausführungsbeispiel kann die Schutzeinrichtung in dem radial verjüngten Verjüngungsabschnitt bis zu einer solchen radialen Höhe angeordnet sein, dass die Schutzeinrichtung radial nicht über den Schaftabschnitt übersteht, insbesondere mit diesem bündig abschließt. Anschaulich können Schutzeinrichtung und daran angeschlossene Abschnitte des Schaftabschnitts fluchten.

Gemäß einem exemplarischen Ausführungsbeispiel kann die Schutzeinrichtung ( ergänzend zu dem kompressiblen Material) mindestens eine Schutzrampe aufweisen, die bezogen auf eine Einschraubrichtung des Befestigungselements hinter (insbesondere unmittelbar hinter) dem Sensor angeordnet ist, insbesondere zumindest teilweise in dem radial verjüngten Verjüngungsabschnitt. Ergänzend zum Ausbilden der Schutzeinrichtung als kompressibler Ring kann die Schutzeinrichtung auch als (beispielsweise aus einem Metall ausgebildete) Rampe vorgesehen sein. Letztere kann bei einem drehenden Setzen des Befestigungselements in ein jeweiliges Bauwerksegment einen radialen Überstand gegenüber dem Sensor definieren, was zuverlässig einen radialen Abstand zwischen dem Sensor in dem Verjüngungsabschnitt und einer Wandung der Bauwerksegmente aufrechterhält. Die Schutzrampe kann so ausgebildet sein, dass diese ausgehend von einem radialen Ende, das stetig mit dem Verjüngungsabschnitt abschließt, sich kontinuierlich radial nach außen erstreckt. Die Schutzrampe erstreckt sich dann bis zu einer solchen radialen Position, dass an dieser Stelle ein abruptes Rückführen der Schutzrampe zu einer radialen Position erfolgt, die dem Verjüngungsabschnitt entspricht. An diesen radial sich am weitesten nach außen erstreckenden Endbereich der Schutzrampe schließt sich der Sensor so an, dass der Sensor in einem Abschirmbereich der Schutzrampe angeordnet ist. In einer Eindrehrichtung kann sich also der Sensor direkt oder mit Abstand an einen sich radial am weitesten nach außen erstreckenden Endbereich der Schutzrampe anschließen.

Gemäß einem exemplarischen Ausführungsbeispiel kann das erste Befestigungsende ein Verankerungsgewinde aufweisen, insbesondere ein Betonschraubengewinde oder ein Holzschraubengewinde oder auch ein metrisches Gewinde. Wenn das erste Befestigungsende mit einem Verankerungsgewinde versehen ist, kann ein drehendes Setzen des Befestigungselements in ein zugehöriges Bauwerksegment gefördert werden. Das Verankerungsgewinde kann in einer Spitze des Befestigungselements enden, beispielsweise um ein vorbohrungsfreies Setzen eines Befestigungselements in ein Bauwerksegment zu fördern, zum Beispiel ein vorbohrungsfreies Setzen einer Holzschraube in ein Bauwerksegment aus Holz. Alternativ kann das Verankerungsgewinde auch an einer planen Stirnfläche des Befestigungselements enden, zum Beispiel wenn das Befestigungselement drehend in ein mit einer Vorbohrung versehenes Bauwerksegment (oder in zwei Bauwerksegmente mit einer fluchtenden Vorbohrung) gesetzt wird.

Gemäß einem exemplarischen Ausführungsbeispiel kann das zweite Befestigungsende ein Außengewinde, insbesondere ein metrisches Außengewinde, aufweisen. An dem zweiten Befestigungsende des Befestigungselements kann ein Außengewinde angebracht sein, das beispielsweise zum Verspannen oder Verspreizen des Befestigungselements eingesetzt wird. Dies kann beispielsweise bei einem Bolzenanker der Fall sein, der zunächst in ein Verankerungsloch in den Bauwerksegmenten eingeschlagen werden kann, bevor zum Beispiel durch Aufschrauben einer Mutter auf das Außengewinde ein axialer Druck auf das Befestigungselement ausgeübt werden kann, das im Inneren von zumindest einem der Bauwerksegmente zu einem Verschieben einer Spreizhülse entlang eines Konuskörpers des Bolzenankers führt, was eine Verankerungskraft bewirkt.

Gemäß einem exemplarischen Ausführungsbeispiel kann der Schaftabschnitt zumindest abschnittsweise gewindefrei ausgebildet sein. Somit ist es möglich, dass ein Teil des Schaftabschnitts von einem Gewinde frei ist, das heißt ein glatter Bolzenabschnitt ist. Dies kann zum Beispiel ein reibungsarmes Setzen des Befestigungselements fördern. Ein anderer Abschnitt des Schaftabschnitts kann mit einem Gewinde ausgestattet sein, beispielsweise mit dem oben beschriebenen Verankerungsgewinde und/oder Außengewinde.

Gemäß einem exemplarischen Ausführungsbeispiel kann der radial verjüngte Verjüngungsabschnitt als ringförmige Aussparung an einer radialen Außenseite des Schaftabschnitts ausgebildet sein. Mit Vorteil kann der Verjüngungsabschnitt also in einem Außenbereich des Befestigungsabschnitts angeordnet sein. Dies erlaubt zum einen eine besonders einfache Montage des mindestens einen Sensors, der einfach in die Aussparung an einer Außenseite des Schaftabschnitts eingelegt und dort (zum Beispiel klebend) befestigt werden kann. Zum anderen ist die beschriebene Position an einer Außenseite des Schaftabschnitts eine besonders geeignete Möglichkeit, Sensordaten an einer maßgeblichen Position zu erfassen. Erfolg oder Misserfolg eines Setzvorgangs kann besonders zuverlässig an einer Außenseite des Schaftabschnitts erkannt werden, da dort ein beispielsweise problematischer Setzvorgang zu einer charakteristischen Erhöhung der Dehnung führen kann. Auch die Abnahme der Setzkraft über die Zeit hinweg bzw. das Ausbilden einer Zugspannung kann an einem solchen Verjüngungsabschnitt mit besonders hoher Genauigkeit sensorisch erkannt werden.

Gemäß einem exemplarischen Ausführungsbeispiel kann das Befestigungselement als Holzschraube ausgebildet sein, insbesondere zur Durchsteckmontage. Zum Beispiel kann eine Holzschraube durch ein Loch in einem an einem ersten Bauwerksegment aus Holz anzubringenden zweiten Bauwerksegment hindurchgeführt werden und kann dann (mit oder ohne Vorbohrung) in den Holz-Verankerungsgrund gesetzt werden.

Gemäß einem exemplarischen Ausführungsbeispiel kann das Befestigungselement als Betonschraube ausgebildet sein, insbesondere zur Durchsteckmontage. Eine solche Betonschraube kann beispielsweise durch ein Loch in einem an einem ersten Bauwerksegment aus Beton anzubringenden zweiten Bauwerksegment durchgeführt werden und kann dann, vorzugsweise mit Vorbohrung, in den Beton-Verankerungsgrund eingeführt werden.

Gemäß einem exemplarischen Ausführungsbeispiel kann das Befestigungselement als Bolzenanker, insbesondere als Betonanker, ausgebildet sein. Im Rahmen der vorliegenden Anmeldung kann unter einem "Bolzenanker" insbesondere eine in einem Setzloch eines ersten Bauwerksegments verankerbare mehrteilige Befestigungsvorrichtung verstanden werden, die zumindest einen Bolzenkörper und eine darauf montierte Spreizhülse aufweist.

Ein Bolzenanker kann in ein Setzloch eingeführt werden und dann durch eine axiale Relativverschiebung zwischen Bolzenkörper und Spreizhülse in eine Konfiguration überführt werden, in der die Spreizhülse durch Eindringen eines endseitig radial erweiterten Spreizkörpers des Bolzenkörpers in radialer Richtung expandiert wird. Dadurch kommt es zu einer Verklemmung zwischen Spreizhülse und einer Wandung des ersten Bauwerksegments, wodurch der Bolzenanker in dem ersten Bauwerksegment gesetzt ist. An einem Bolzenanker kann ein zweites Bauwerksegment befestigt werden, beispielsweise über ein Gewinde des Bolzenankers. Ein Bolzenanker weist einen beispielsweise konusförmigen Spreizkörper und eine Spreizhülse auf, die durch Einziehen des Spreizkörpers in die Spreizhülse aufgespreizt werden kann. Der Spreizkörper kann einstückig an einen Schaftabschnitt angestückt sein, auf dem die Spreizhülse aufgesetzt werden kann. Zur Verankerung des Spreizankers kann dieser mit dem Spreizkörper voraus in ein Setzloch in einem ersten Bauwerksegment eingebracht werden, wobei auch die Spreizhülse in das Setzloch eingeführt werden kann. Danach kann der Spreizkörper zurückgezogen werden, ohne dass die im Setzloch reibschlüssig angeordnete Spreizhülse das Setzloch verlässt. Der Spreizkörper kann durch die beschriebene Vorgehensweise in die Spreizhülse eingezogen werden, wodurch die Spreizhülse in radialer Richtung aufspreizt. Dies verankert den Bolzenanker im Bohrloch. An einem außerhalb des Verankerungsgrunds verbleibenden Abschnitt des Bolzenankers kann ein zweites Bauwerksegment befestigt werden. Ein Bolzenanker kann an dem ersten Befestigungsende eine konusförmige Erweiterung aufweisen, die mit einer auf dem Schaftabschnitt beweglich angeordneten Spreizhülse zusammenwirken kann. Ist der Bolzenanker in einem Verankerungsgrund (zum Beispiel aus Beton) eingeschlagen worden, kann ein Aufdrehen einer Mutter auf ein zweites Befestigungsende des Befestigungselements eine Axialkraft zwischen Spreizhülse und Konuskörper bewirken, das heißt genauer gesagt ein Aufschieben der Spreizhülse auf den Konuskörper unter Ausbilden einer hohen Verankerungskraft.

Gemäß einem exemplarischen Ausführungsbeispiel kann das Befestigungselement als Ankerstange ausgebildet sein, insbesondere für einen chemischen Dübel. Wenn das Befestigungselement als (Gewinde- oder gewindefreie) Ankerstange ausgebildet ist, kann diese in ein Befestigungsloch der beiden Bauwerksegmente eingesetzt werden. Durch Einbringen eines aushärtbaren Mediums (zum Beispiel eines Epoxidharzes) bzw. von Mörtel vor oder nach dem Einführen der Ankerstange in die Bauwerksegmente kann es dann zum Ausbilden einer chemischen Verbindung zwischen den Bauwerksegmenten, dem Befestigungselement und dem aushärtbaren Medium kommen.

Gemäß einem exemplarischen Ausführungsbeispiel kann das Befestigungselement als Kunststoffdübel ausgebildet sein, insbesondere für eine Holzschraube. Wenn das Befestigungselement als Dübel (insbesondere aus Kunststoff oder auch aus Metall) ausgebildet ist, kann ein solcher Dübel in ein Verankerungsloch in den zu verbindenden Bauwerksegmenten eingeschlagen werden. Nachfolgend kann eine Schraube, zum Beispiel eine Holzschraube, in einen Aufnahmehohlraum des Dübels eingedreht werden, wodurch es zum Aufspreizen von Spreizelementen des Dübels und somit zum Ausbilden einer hohen Setzkraft kommt.

Andere Befestigungselemente sind natürlich ebenfalls möglich.

Gemäß einem exemplarischen Ausführungsbeispiel kann das Empfängergerät zum drahtlosen Kommunizieren mit dem Sensor ausgebildet sein. Das Empfängergerät kann also eine drahtlose Kommunikationseinrichtung zum drahtlosen Kommunizieren mit dem Sensor des Befestigungselements aufweisen, selbst wenn der Sensor in einem Inneren der Bauwerksegmente angeordnet ist. Alternativ oder ergänzend kann das Empfängergerät aber auch zum drahtgebundenen Kommunizieren mit dem Sensor ausgebildet sein, beispielsweise unter Verwendung eines Übermittlungskabels zwischen Sensor und Empfängergerät.

Gemäß einem exemplarischen Ausführungsbeispiel kann das Empfängergerät aus einer Gruppe ausgewählt sein, die besteht aus einem Computer und einem portablen Nutzer-Endgerät, insbesondere einem Smartphone oder einem Tablet. Beispielsweise kann ein Benutzer bequem an seinem Laptop oder an seinem Mobilfunkgerät den Erfolg eines Setzvorgangs ablesen, wenn Laptop oder Mobilfunkgerät mit dem Sensor zum Datenaustausch kommunizierfähig gekoppelt ist. Es ist auch möglich, als Empfängergerät einen Router einzusetzen, der in einem Kommunikationsnetzwerks kommunizierfähig implementiert werden kann.

Gemäß einem exemplarischen Ausführungsbeispiel kann als Schutzeinrichtung der zumindest teilweise in dem Verjüngungsabschnitt angeordnete Sensor mit Schaum umspritzt werden, der zumindest teilweise in den Verjüngungsabschnitt eingespritzt wird. Wenn der beispielsweise außenseitig an dem Verjüngungsabschnitt des Schaftabschnitts anzubringende mindestens eine Sensor installiert ist, kann durch einfaches Umspritzen mit einem Schaum (zum Beispiel auf Epoxidbasis) der Sensor an Ort und Stelle immobilisiert werden und vor mechanischen Einflüssen insbesondere während des Setzvorgangs geschützt werden. Gleichzeitig kann ein mit einem kompressiblen Schaum umspritzter Sensor, beispielsweise ein Dehnmessstreifen, ohne Verlust von Nachweisgenauigkeit Dehnungen oder andere Parameter an dem gesetzten Befestigungselement erfassen. Auch ist es vorteilhaft, die Schutzvorrichtung in einfacher Weise mittels bloßen Umspritzens am Befestigungselement anzubringen.

Gemäß einem exemplarischen Ausführungsbeispiel kann das Befestigungselement während des Spritzens von Schaum zumindest abschnittsweise von einer Schale umgeben werden. Wenn zumindest der Verjüngungsabschnitt beim Umspritzen mit Schaum außenseitig durch eine Schale umgeben ist, kann präzise vorgegeben werden, bis zu welcher Radialerstreckung sich die schaumartige Schutzvorrichtung erstreckt. Dies erlaubt mit einfachen herstellungstechnischen Mitteln die Sicherstellung eines reibungsarmen Setzens des Befestigungselements in einem Bauwerksegment.

Im Folgenden werden exemplarische Ausführungsbeispiele der vorliegenden Erfindung mit Verweis auf die folgenden Figuren detailliert beschrieben.
Figur 1 zeigt eine Querschnittsansicht einer Bauwerkanordnung gemäß einem exemplarischen Ausführungsbeispiel der Erfindung.
Figur 2 zeigt eine Querschnittsansicht einer Bauwerkanordnung gemäß einem anderen exemplarischen Ausführungsbeispiel der Erfindung.
Figur 3 zeigt ein Befestigungselement gemäß einem exemplarischen Ausführungsbeispiel der Erfindung.
Figur 4 zeigt ein Detail eines Befestigungselements gemäß einem exemplarischen Ausführungsbeispiel der Erfindung.
Figur 5 zeigt eine Querschnittsansicht eines Befestigungselements gemäß einem exemplarischen Ausführungsbeispiel der Erfindung.
Figur 6 zeigt eine Querschnittsansicht eines Befestigungselements gemäß einem weiteren exemplarischen Ausführungsbeispiel der Erfindung.
Figur 7 zeigt ein Befestigungselement gemäß einem anderen exemplarischen Ausführungsbeispiel der Erfindung.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden.

Gemäß einem exemplarischen Ausführungsbeispiel wird mindestens ein Befestigungselement (beispielsweise ein Sensoranker) als Messinstrument in einem Bauwerk eingesetzt. Das auch als Bauwerkanordnung bezeichnete Bauwerk kann insbesondere ein Tunnel oder ein Gebäude sein. Die Bauwerkanordnung kann mindestens zwei benachbart zueinander angeordnete Bauwerksegmente aufweisen. Darüber hinaus kann die Bauwerkanordnung ein Befestigungselement mit einem ersten und einem zweiten Verankerungsende aufweisen, von denen eines in dem einen und das andere in dem anderen Bauwerksegment fixiert ist. Ferner kann in dem Befestigungselement ein Messabschnitt zwischen erstem und zweiten Verankerungsende gebildet sein. Mindestens ein Sensor kann im Messabschnitt angeordnet sein, um Verankerungsdaten bzw. Verankerungsparameter zu erfassen. Darüber hinaus kann die Bauwerkanordnung eine Übertragungseinrichtung zum Übertragen der Sensordaten an einen Empfänger aufweisen, der beispielsweise ein in Bezug auf das Befestigungselement externes Empfängergerät sein kann. Auf diese Weise kann in einer komplexen Bauwerkanordnung (die auch eine Vielzahl von Bauteilsegmenten und eine Vielzahl von Befestigungselementen mit den beschriebenen Merkmalen aufweisen kann), eine sensorische Überwachung der mechanischen Eigenschaften im Inneren der Bauwerkanordnung durchgeführt werden. Tritt an einer Stelle der Bauwerkanordnung eine mechanische Schwächung auf, insbesondere in einem Schnittstellenbereich zwischen mittels eines jeweiligen Befestigungselements miteinander verbundenen Bauwerksegmenten, kann dies von einem dort angeordneten Sensor des zugehörigen Befestigungselements schnell und ortsaufgelöst erfasst werden und einem Empfängergerät übermittelt werden. Dann können zügig und gezielt Gegenmaßnahmen ergriffen werden, beispielsweise eine Wartung, eine Reparatur oder ein Austausch eines oder mehrerer Bauwerksegmente der Bauwerkanordnung.

Bei jedem der Bauwerksegmente kann es sich beispielsweise um ein Betonsegment, einen Tübbing, ein Holzsegment oder ein Metallsegment handeln. Das Bauwerk bzw. die Bauwerkanordnung kann zum Beispiel ein Gebäude (wie zum Beispiel ein Haus, insbesondere ein Hochhaus), eine Brücke, ein Tunnel (aufweisend eine Vielzahl von miteinander verbundenen Tübbingen), eine Fahrbahn (bei der die Bauwerksegmente Betonplatten sein können) oder eine technische Konstruktion (zum Beispiel ein Hochlastlagerregal), Regalfüße, ein Schutzzaun wie zum Beispiel ein Lawinenschutzzaun, ein Fallschutzgitter, ein Geröllschutz, ein Schneefanggitter, etc.) sein.

Beispielsweise kann der Sensor als Temperatursensor, Dehnmessstreifen, Drehmomentsensor, Feuchtigkeitssensor, etc. ausgebildet sein. Ermittelte Verankerungsdaten bzw. Verankerungsparameter können zum Beispiel Temperatur, Dehnung, Drehmoment, Feuchtigkeit und/oder Vibrationen bzw. Schwingungen sein.

Es ist allerdings auch möglich, den mindestens einen Sensor als Ultraschallsensor, als Sensor für eine seismische Messung und/oder als GPS (Global Positioning System)-Sensor auszubilden. Als Verankerungsdaten bzw. Verankerungsinformationen kann zum Beispiel eine Längenänderung des Befestigungselements ermittelt werden, wenn der Sensor als Ultraschallsensor oder seismischer Sensor ausgebildet ist. Eine Ortung bzw. ein Tracking kann mithilfe eines Tags (als Geolokalisator) erfolgen, beispielsweise unter Verwendung eines GPS-Sensors.

Als Übertragungseinrichtung zum Übertragen der Verankerungsdaten kann zum Beispiel eine kabelgebundene Übertragungsleitung verwendet werden, die insbesondere in Harz gegossen sein kann. Alternativ kann hierfür ein Funksender eingesetzt werden, der die Daten bzw. Messwerte via NFC, Bluetooth und/oder WLAN übertragen kann. Von Vorteil kann hierbei sein, dass das Messelement zumindest zum Teil als Übertragungsleitung oder als Antenne fungieren kann.

Ein Empfängergerät kann zum Beispiel zum drahtlosen Kommunizieren via WLAN, Bluetooth und/oder eine Funkantenne gekoppelt werden oder kann kabelgebunden angeschlossen werden. Zum Beispiel kann ein Empfängergerät ein Computer, ein Smartphone, ein Tablet, ein Powertool, oder ein Server sein. Es ist auch möglich, das Empfängergerät mit einer Datenbank, einer Smarthome-Anwendung und/oder einem Router zu versehen.

Beispielsweise kann das Messelement als Holzschraube, Betonschraube, Betonanker oder Ankerstange (insbesondere im Zusammenhang mit einem chemischen Dübel) ausgebildet werden.

Das Messelement kann an einem Verankerungsende ein Befestigungsgewinde in Form eines Betonschraubengewindes oder eines Holzschraubengewindes aufweisen. Zum Beispiel kann das Verankerungsende ein eingeklebtes metrisches Gewinde sein. Der Messabschnitt kann elastisch im Bereich einer zu erwartenden Verformung oder Verzerrung angeordnet werden. Bevorzugt wird der Sensor in einem verjüngten Bereich des Schaftabschnitts und mit radialem Abstand zum Bohrloch angeordnet. Insbesondere kann eine Rampe als Schutz für den mindestens einen Sensor vorgesehen werden, bevorzugt an der verjüngten Stelle des Schaftabschnitts.

Der Sensor kann ausgebildet sein, relative Änderungen zu messen (zum Beispiel bei einer Konfiguration als Dehnmessstreifen, Ultraschallsensor bzw. Induktionssensor). Alternativ kann der Sensor allerdings auch ausgebildet werden, eine absolute Längenänderung zu messen. Dies kann zum Beispiel durch ein Eichen des Sensors (insbesondere eines Dehnmessstreifens) erreicht werden, um eine Langenänderung absolut zu erlassen. Auch mit einem Ultraschallsensor können absolute Längenänderungen erfasst werden. Auch zum Erfassen absoluter Längenänderungen kann allerdings ein Eichen entbehrlich sein. Vorteilhaft ist es aber für eine Messung einer absoluten Längenänderung, dass die Gesamtlänge des dehnbaren Abschnitts des Messelements bzw. des Sensors bekannt ist oder erfasst wird.

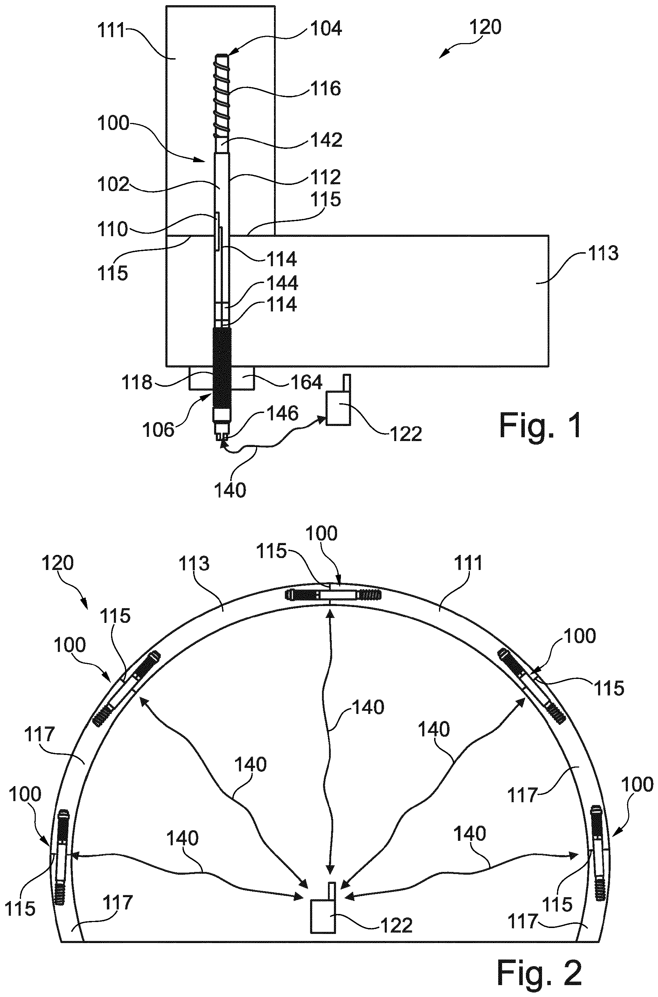

**Figur 1** zeigt eine Querschnittsansicht einer Bauwerkanordnung 120 gemäß einem exemplarischen Ausführungsbeispiel der Erfindung. Die Bauwerkanordnung 120 gemäß Figur 1 kann zum Beispiel ein Gebäude in einem erdbebengefährdeten Gebiet sein. In dem dargestellten Ausführungsbeispiel weist die Bauwerkanordnung 120 ein als erste Betonwand ausgebildetes erstes Bauwerksegment 111 und ein als zweite Betonwand ausgebildetes zweites Bauwerksegment 113 auf. Die beiden Betonwände bilden Teil einer Hauswand, verlaufen gemäß Figur 1 in zueinander orthogonalen Richtungen und sind an einer Schnittstellenfläche 115 miteinander in Berührkontakt gebracht. Ein im Weiteren näher beschriebenes Befestigungselement 100 befestigt die beiden Bauteilsegmente 111, 113 an der Schnittstellenfläche 115 miteinander und stellt darüber hinaus eine Sensorfunktion zum Überwachen der mechanischen Integrität der Bauwerkanordnung 120 im Bereich der Schnittstellenfläche 115 bereit. Besagte Sensorfunktion ermöglicht es, eine Veränderung der Verspannung bzw. ein gegenseitiges Wegbewegen der miteinander verbundenen Bauwerksegmente 111, 113 schnell und zuverlässig zu erkennen. In anderen Ausführungsbeispielen können die Bauteilsegmente 111, 113 beispielsweise auch zwei Holzbalken oder Komponenten einer Holz-Beton-Kombination sein.

Wie bereits angesprochen, weist die in Figur 1 dargestellte erste Bauwerkanordnung 120 das erste Bauwerksegment 111, das mit dem ersten Bauwerksegment 111 in Berührkontakt stehende zweite Bauwerksegment 113 angrenzend an das erste Bauwerksegment 111 und das an dem ersten Bauwerksegment 111 und an dem zweiten Bauwerksegment 113 befestigte Befestigungselement 100 auf. Das Befestigungselement 100 weist einen Schaftabschnitt 102 mit einem ersten Befestigungsende 104 an einem ersten Ende des Schaftabschnitts 102 auf, wobei das erste Befestigungsende 104 an dem ersten Bauwerksegment 111 befestigt ist. Darüber hinaus weist der Schaftabschnitt 102 ein zweites Befestigungsende 106 an einem zweiten Ende des Schaftabschnitts 102 auf, wobei das zweite Befestigungsende 106 an dem zweiten Bauwerksegment 113 befestigt ist. Im Übergangsbereich (oder im Bereich der Schnittstellenfläche 115) zwischen dem ersten Bauwerksegment 111 und dem zweiten Bauwerksegment 113 ist das Befestigungselement 100 mit einem Sensor 110 zum Erfassen von Verankerungsdaten des Befestigungselements 100 in dem ersten Bauwerksegment 111 und in dem zweiten Bauwerksegment 113 ausgerüstet. Wie in Figur 1 dargestellt, erstreckt sich der Sensor 110 räumlich teilweise innerhalb des ersten Bauwerksegments 111 und teilweise innerhalb des zweiten Bauwerksegments 113 und verläuft hierbei auch durch die Schnittstellenfläche 115. Somit ist der Sensor 110 in einem Grenzbereich zwischen dem ersten Bauwerksegment 111 und dem zweiten Bauwerksegment 113 positioniert, um Verankerungsdaten an einem Übergang zwischen dem ersten Bauwerksegment 111 und dem zweiten Bauwerksegment 113 zu erfassen. Dadurch ist es ermöglicht, die mechanische Integrität der Bauwerkanordnung 120 spezifisch an dem kritischen Übergang zwischen den beiden verbundenen Bauwerksegmenten 111, 113 im Bereich ihrer Schnittstelle sensorisch zu charakterisieren und zu überwachen. Darüber hinaus ist das Befestigungselement 100 mit einer Übertragungseinrichtung 114 zum Übertragen der sensorisch erkannten Verankerungsdaten von dem Sensor 110 zu einem externen Empfängergerät 122 ausgestattet. Der Sensor 110 ist beispielsweise ein Dehnmessstreifen zum Erfassen von Verankerungsdaten, die relative Informationen und/oder absolute Information betreffend einen Messparameter (zum Beispiel eine Zugspannung) enthalten können.

Besagtes Empfängergerät 122 dient zum Empfangen von mittels des Sensors 110 des Befestigungselements 100 erfassten Verankerungsdaten und ist kommunizierfähig mit dem Sensor 110 gekoppelt. Genauer gesagt kann das Empfängergerät 122 zum drahtlosen Kommunizieren über ein Kommunizierende 146 des Befestigungselements 100 und darüber mit der Übertragungseinrichtung 114 und mit dem Sensor 110 ausgebildet sein, siehe das eine Datenübermittlung anzeigende Bezugszeichen 140. Gemäß Figur 1 ist das Empfängergerät 122 zum Beispiel ein portables Nutzer-Endgerät in Form eines Smartphones.

Um das Befestigungselement 100 in der in Figur 1 dargestellten Weise in den Bauwerksegmenten 111, 113 zu setzen, kann in den Bauwerksegmenten 111, 113 zum Beispiel ein Bohrloch gebildet werden, das sich vollständig durch das zweite Bauwerksegment 113 hindurch und teilweise in das erste Bauwerksegment 111 hinein erstreckt. Beispielsweise kann ein solches Bohrloch mittels eines Betonbohrers gebildet werden (nicht gezeigt). Danach kann das Befestigungselement 100 durch das zweite Bauwerksegment 113 hindurch in das erste Bauwerksegment 111 eingeschraubt werden, wobei ein Verankerungsgewinde 116 ein Gegengewinde im Betonuntergrund furchen kann. Das Befestigungselement 100 kann so tief in die Bauwerksegmente 111, 113 eingeführt werden, bis der Sensor 110 im Bereich der Schnittstellenfläche 115 positioniert ist. Optional kann das Befestigungselement 100 danach am Betonuntergrund verspannt werden, indem eine (optionale, aber vorteilhafte) Mutter 164 an einem metrischen Außengewinde 118 aufgeschraubt wird (optional mit Beilegscheibe zwischen dem zweiten Bauteilsegment 113 und der Mutter 164, nicht gezeigt).

**Figur 2** zeigt eine Querschnittsansicht einer Bauwerkanordnung 120 gemäß einem anderen exemplarischen Ausführungsbeispiel der Erfindung. Figur 2 zeigt einen Querschnitt durch einen Tunnel, der durch eine Vielzahl von miteinander verbundenen Tübbingen begrenzt ist. Jeder Tübbing bildet eines der in Figur 2 gezeigten Bauwerksegmente 111, 113, 117 der Bauwerkanordnung 120. Es ist aber auch möglich, dass andere Bauwerksegmente 111, 113, 117 für die Bauwerkanordnung 120 gemäß Figur 2 eingesetzt werden, zum Beispiel Holzbalken oder Betonplatten.

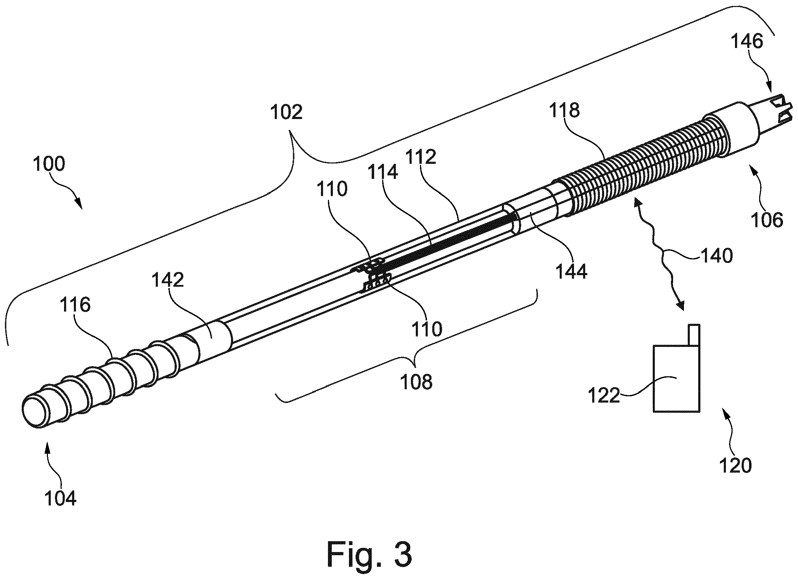

Bei der Bauwerkanordnung 120 gemäß Figur 2 ist eine Vielzahl von paarweise benachbarten Bauwerksegmenten 111, 113, 117 vorgesehen. In entsprechender Weise ist eine Vielzahl von Befestigungselementen 100 vorgesehen, von denen jedes zwei benachbarte Bauwerksegmente 111, 113, 117 paarweise miteinander befestigt. Jedes der Befestigungselemente 100 ist mit einem Sensor 110 und einer Übermittlungseinrichtung 114 ausgestattet, zum Beispiel in der Figur 1 oder Figur 3 gezeigten Weise. Beispielsweise kann also jedes der Befestigungselemente 100 ausgebildet sein wie bezugnehmend auf Figur 1 oder Figur 3 beschrieben. Die Übermittlungseinrichtung 114 dient zum Bereitstellen von setzortspezifischen Verankerungsdaten an ein Empfängergerät 122.

Gemäß Figur 2 ist es möglich, beispielsweise mittels eines einzigen oder gemeinsamen Empfängergeräts 122, Sensorinformationen von einer Vielzahl von Sensoren 110 der Vielzahl von Befestigungselementen 100 zu erfassen. Wenn die übermittelte Sensorinformation auch einen Setzort eines entsprechenden Befestigungselements 100 angibt (zum Beispiel durch Übermittlung entsprechender Identifizierungsinformation oder durch Detektion von Ortsinformation unter Verwendung eines GPS-Sensors), ist es möglich, bei der Übermittlung kritischer Information den Ort einer mechanisch kritischen Befestigung zu identifizieren. Wird zum Beispiel eine Befestigung zwischen zwei benachbarten Bauwerksegmenten 111, 113, 117 geschwächt, kann dies von einem Sensor 110 übermittelt und dem Empfängergerät 122 zugänglich gemacht werden. Das Empfängergerät 122 kann aus den übermittelten Sensordaten auch ableiten, an welcher Position innerhalb der Bauwerkanordnung 100 eine mechanisch kritische Konfiguration eingetreten ist, zum Beispiel eine lokal geschwächte Befestigungskraft.

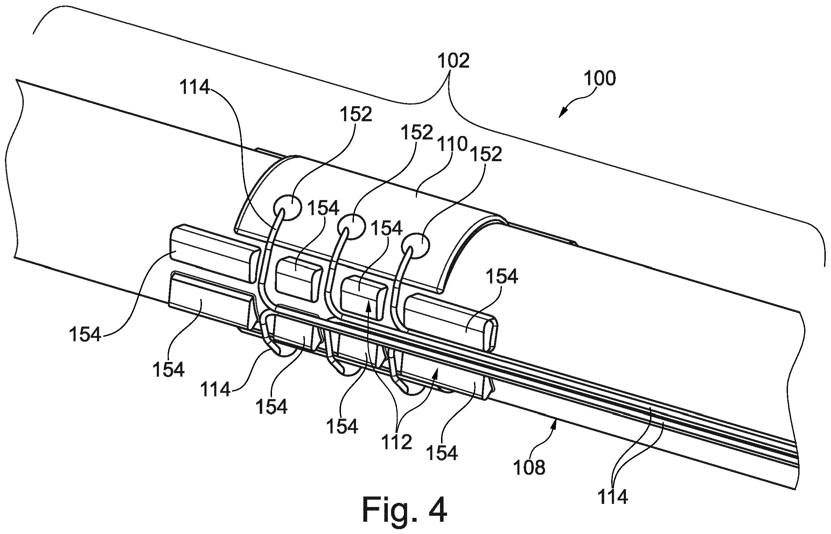

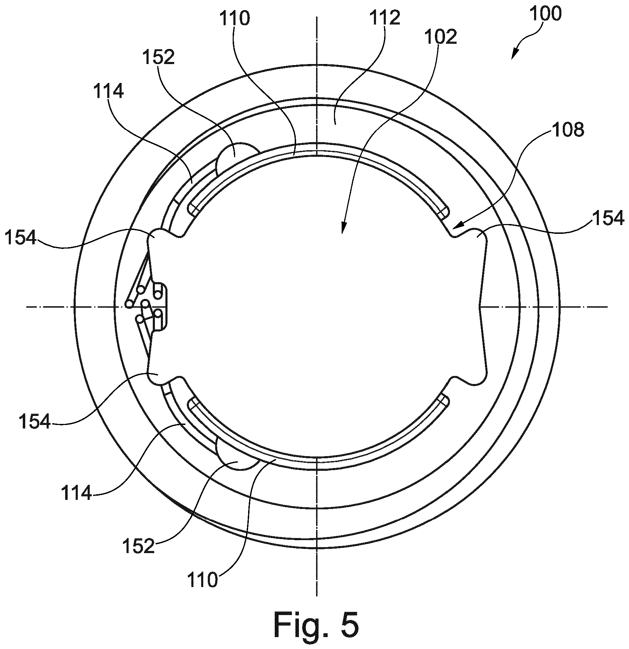

**Figur 3** zeigt ein Befestigungselement 100 gemäß einem exemplarischen Ausführungsbeispiel der Erfindung, das in einer Bauwerkanordnung 120 gemäß Figur 1 oder Figur 2 eingesetzt werden kann. **Figur 4** zeigt ein Detail eines solchen Befestigungselements 100. **Figur 5** zeigt eine entsprechende Querschnittsansicht eines Befestigungselements 100. Genauer gesagt zeigt Figur 3 eine Anordnung mit einem Befestigungselement 100 und einem Empfängergerät 122. Letzteres kann ausgebildet sein, wie bezugnehmend auf Figur 1 oder Figur 2 beschrieben

Das in Figur 3 im Detail dargestellte Befestigungselement 100 weist einen Schaftabschnitt 102 auf. Ein Teilabschnitt des Schaftabschnitts 102 ist gemäß Figur 3 gewindefrei ausgebildet.

Ein erstes Befestigungsende 104 an einem ersten Ende des Schaftabschnitts 102 dient zum Verankern in einem ersten Bauwerksegment 111. Das erste Befestigungsende 104 kann ein Verankerungsgewinde 116 aufweisen, zum Beispiel ein Betonschraubengewinde oder ein Holzschraubengewinde, oder auch ein metrisches Gewinde.

Darüber hinaus fungiert ein zweites Befestigungsende 106 an einem dem ersten Ende gegenüberliegenden zweiten Ende des Schaftabschnitts 102 zum Beispiel zum Befestigen an einem zweiten Bauwerksegment 113. Das zweite Befestigungsende 106 kann bevorzugt ein Außengewinde 118 aufweisen, beispielsweise ein metrisches Außengewinde.

Darüber hinaus enthält das Befestigungselement 100 einen radial verjüngten Verjüngungsabschnitt 108 des Schaftabschnitts 102 axial zwischen dem ersten Befestigungsende 104 und dem zweiten Befestigungsende 106. Genauer gesagt ist der radial verjüngte Verjüngungsabschnitt 108 als ringförmige Aussparung an einer radialen Außenseite des Schaftabschnitts 102 ausgebildet.

In dem Verjüngungsabschnitt 108 versenkt angeordnet sind Sensoren 110 zum Erfassen von Verankerungsdaten des Befestigungselements 100 in dem Verankerungsgrund, d.h. in einem oder beiden der Bauwerksegmente 111, 113 oder an einer Schnittstellenfläche 115 dazwischen. Bei Anbringen der Sensoren 110 im Verjüngungsabschnitt 110 befinden sich die Sensoren 110 an der mechanisch schwächsten Stelle des Befestigungselements 100, d.h. im verjüngten Bereich des Schaftzentrums. Diese Sensordaten oder Verankerungsdaten können dazu verwendet werden, einen Setzerfolg des Befestigungselements 100 in dem aus den Bauteilsegmenten 111, 113 gebildeten Verankerungsgrund zu überprüfen und langfristig zu überwachen. Die Sensoren 110 können zum Beispiel als Dehnmessstreifen ausgebildet werden, die im Verjüngungsabschnitt 108 auf den Schaftabschnitt 102 aufgeklebt werden können. Beispielsweise können die zum Beispiel als Dehnmessstreifen ausgebildeten Sensoren 110 als Vollbrücke verschaltet sein. Allgemein können die Sensoren 110 zum Erfassen einer Dehnung des Schaftabschnitts 102, eines Drehmoments des Schaftabschnitt 102 und/oder einer Temperatur ausgebildet sein.

Mit Vorteil ist an dem Befestigungselement 100 darüber hinaus eine im Weiteren näher beschriebene Schutzeinrichtung 112 zum Schützen der Sensoren 110 vor einer Beschädigung im Betrieb vorgesehen. Die Schutzeinrichtung 112 kann vorteilhaft einen kompressiblen und feuchtigkeitsundurchlässigen Schaum aufweisen. Bevorzugt kann ein solcher Schaum ein aromatisches Isocyanat aufweisen. Besagte Schutzeinrichtung 112 kann in dem radial verjüngten Verjüngungsabschnitt 108 und die Sensoren 110 schützend bedeckend angeordnet sein. Ebenfalls vorteilhaft kann die Schutzeinrichtung 112 umfänglich geschlossen in dem radial verjüngten Verjüngungsabschnitt 108 angeordnet sein. Ferner ist vorteilhaft, wenn die Schutzeinrichtung 112 in dem radial verjüngten Verjüngungsabschnitt 108 bis zu einer solchen radialen Höhe angeordnet ist, dass die Schutzeinrichtung 112 radial nicht über den Schaftabschnitt 102 übersteht. Besonders bevorzugt schließt die Schutzeinrichtung 112 mit dem Schaftabschnitt 102 bündig ab.

Zum Herstellen der Schutzeinrichtung 112 werden die in dem Verjüngungsabschnitt 108 angeordneten Sensoren 110 mit Schaum umspritzt, der auch in den restlichen Verjüngungsabschnitt 108 eingespritzt wird. Während des Spritzens von Schaum kann der Verjüngungsabschnitt 108 von einer Schale (nicht gezeigt) umgeben werden, um die räumliche Erstreckung der Schutzeinrichtung 112 vorzugeben oder zu begrenzen.

Ferner weist das Befestigungselement 100 gemäß Figur 3 eine Übertragungseinrichtung 114 zum Übertragen der Verankerungsdaten von dem Sensor 110 zu dem externen Empfängergerät 122 auf. Wie in Figur 3 gezeigt, kann die Übertragungseinrichtung 114 ein oder mehrere Übertragungskabel aufweisen, das oder die entlang des Schaftabschnitts 102 verlaufend angeordnet ist oder sind. Alternativ oder ergänzend kann die Übertragungseinrichtung 114 auch zum drahtlosen Übertragen der Verankerungsdaten ausgebildet sein. Hierfür kann zum Beispiel als Übertragungstechnologie Near Field Communication (NFC), Bluetooth, Wireless Local Area Network (WLAN), Narrowband Internet of Things (NB-IoT), Long Term Evolution (LTE) und/oder Low Power Wide Area Network (LPWAN) eingesetzt werden.

Wiederum Bezug nehmend auf Figur 3 ist dargestellt, wie das hier als Mobilfunkgerät ausgebildete Empfängergerät 122 kommunizierfähig gekoppelt mit den Sensoren 110 des Befestigungselements 100 ist, siehe das eine Datenübermittlung anzeigende Bezugszeichen 140. Am ersten Befestigungsende 104 ist das Befestigungselement 100 mit dem Verankerungsgewinde 116 ausgestattet, das ein Eindrehen des Befestigungselements 100 in ein Befestigungsloch eines ersten Bauwerksegments 111 fördern kann. Am gegenüberliegenden zweiten Befestigungsende 106 ist das Außengewinde 118 ausgebildet, das zum Beispiel zum Befestigen an einem zweiten Bauwerksegment 113 dienen kann. In einem axialen Zentralabschnitt des Schaftabschnitts 102 befindet sich der als zylindrischer Abschnitt mit abschnittsweise verringertem Außendurchmesser ausgebildete Verjüngungsabschnitt 108, der durch eine ringförmige Aussparung an dem Schaftabschnitt 102 realisiert ist. In diesem radial zurückversetzten Verjüngungsabschnitt 108 sind die hier als Dehnmessstreifen ausgebildeten Sensoren 110 aufgeklebt. Die Sensoren 110 erstrecken sich somit bis zu einer radialen Position, an der diese beim Setzen des Befestigungselements 100 in den Bauwerksegmenten 111, 113 vor einer mechanischen Berührung mit einer Wandung der Bauwerksegmente 111, 113 geschützt sind. Eine als Kabelverbindung ausgebildete Übermittlungseinrichtung 114 übermittelt die elektrischen Sensorsignale der Sensoren 110 zu dem Empfängergerät 122 außerhalb der Bauwerksegmente 111, 113. Die gemäß Figur 3 abschnittsweise kabelgebundene Übermittlungseinrichtung 114 führt die Übermittlungskabel in axialer Richtung an einer Außenseite oder an einer Innenseite des Schaftabschnitts 102 bis ins Äußere des Verankerungslochs. Um die an einer Mantelfläche des Verjüngungsabschnitts 108 angebrachten (zum Beispiel aufgeklebten) Sensoren 110 vor einer mechanischen Beeinträchtigung beim Setzen und danach zu schützen, können die Sensoren 110 mit einem kompressiblen Material umgeben sein, das zum Beispiel mit einer radialen Mantelfläche von gewindefreien Schaftabschnitten 142, 144 bündig oder fluchtend abschließt. Anschaulich sind dadurch die Sensoren 110 in einer kompressiblen Matrix eingebettet, welche die Sensoren 110 vor Beschädigungen schützt und gleichzeitig eine präzise Erfassung von Verankerungsdaten, insbesondere einer mechanischen Dehnung des Schaftabschnitts 102, zulässt.

Mit Bezugszeichen 146 ist in Figur 3 ein Kommunizierende des Befestigungselements 100 dargestellt, an dem eine Übermittlung der sensorisch erfassten Verankerungsdaten an das Empfängergerät 122, kabelgebunden und/oder kabellos, erfolgt. Bei Bezugszeichen 146 kann auch eine Auswerteeinheit zum Anschließen an ein Empfängergerät 122 vorgesehen sein.

In Figur 4 ist ein Detail eines Schaftabschnitts 102 eines Befestigungselements 100 gezeigt, wie es zum Beispiel gemäß Figur 3, Figur 1 oder Figur 7 ausgebildet sein kann. Elektrische Kabel der Übermittlungseinrichtung 114 können an Sensorpads der Sensoren 110 angeschlossen werden, zum Beispiel mittels Lötkontakten 152. Rippen im Verjüngungsabschnitt 108 können Schutzrampen 154 der Schutzeinrichtung 112 bilden und können so ausgebildet sein, dass in Aussparungen zwischen diesen Rippen die elektrischen Kabel der Übermittlungseinrichtung 114 geführt sind. Dies führt zu einem zusätzlichen Schutz der Sensoren 110 gegen eine Fehlfunktion durch mechanische Beeinträchtigungen.

Die Kabel der Übermittlungseinrichtung 114 können in einer Vertiefung des Schaftabschnitts 102 geführt sein. Dadurch kann der Schutz der Kabel vor mechanischer Beeinträchtigung weiter verbessert werden. Vorteilhaft kann nach Einlegen der Kabel in die Vertiefung die Vertiefung mit Harz befüllt werden. Außerhalb der Vertiefung geführte Kabelabschnitte können durch eine Schaummasse geschützt werden, welche auch die Sensoren 110 schützend umgibt. Ein solcher kompressibler Schaum der Schutzeinrichtung 112 kann mantelseitige Kräfte (zum Beispiel von aushärtendem Mörtel) aufnehmen und dadurch die Sensoren 110 vor artifiziellen Krafteinflüssen schützen. Anders ausgedrückt kann die Schutzeinrichtung 112 ausgebildet werden, um von den Bauwerksegmenten 111, 113 auf den Verjüngungsabschnitt 108 mantelflächig einwirkende Kräfte von dem oder den Sensoren 110 abzuschirmen. Dadurch können die Sensoren 110 vor einer unerwünschten Beeinflussung geschützt werden und lediglich Kräfte von Interesse, insbesondere auf das Befestigungselement 100 einwirkende Zugspannungen, erfassen.

Anhand der Querschnittsansicht von Figur 5 ist gut erkennbar, wie bei der Konfiguration gemäß Figur 4 die in Radialrichtung zurückversetzten Sensoren 110 gegen Beschädigung geschützt sind und durch die Schutzeinrichtung 112 eine zusätzliche Sicherung gegen Beschädigung erfahren.

Das Befestigungselement 100 gemäß Figur 3 bis Figur 5 ist als Sensoranker (oder als Betonschraube zur Durchsteckmontage) konfiguriert. Am zweiten Befestigungsende 106 ist ein metrisches Außengewinde 118 vorgesehen. Am ersten Befestigungsende 104 kann das Befestigungselement 100 gemäß Figur 3 bis Figur 5 in ein vorgebohrtes Loch in einem zum Beispiel aus Beton ausgebildeten Verankerungsgrund in Form der Bauwerksegmente 111, 113 eingeschraubt werden. Das Verankerungsgewinde 116 gemäß Figur 3 bis Figur 5 kann somit ein Betongewinde sein. Zwischen einer Wandung der Bauwerksegmente 111, 113 und dem Befestigungselement 100 kann Mörtel zum Einkleben verwendet werden.

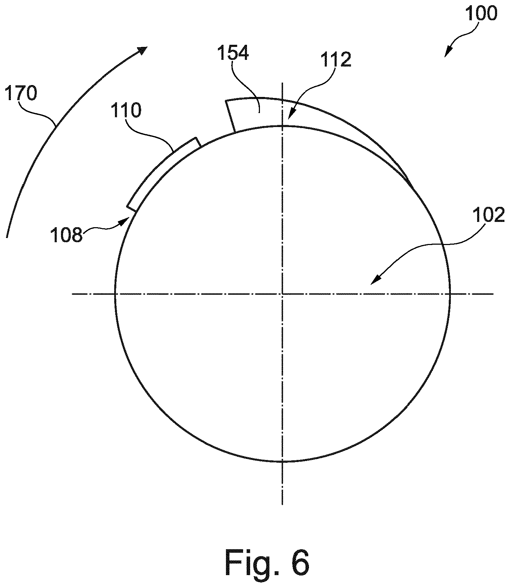

**Figur 6** zeigt eine Querschnittsansicht eines Befestigungselements 100 gemäß einem weiteren exemplarischen Ausführungsbeispiel der Erfindung.

Wie in Figur 6 dargestellt, kann die Schutzeinrichtung 112 eine Schutzrampe 154 aufweisen, die in einer Einschraubrichtung 170 des Befestigungselements 100 hinter dem Sensor 110 angeordnet ist. Die Schutzrampe 154 kann in dem radial verjüngten Verjüngungsabschnitt 108 angeordnet werden.

Der Querschnittsansicht gemäß Figur 6 ist zu entnehmen, wie ein jeweiliger Sensor 110 in Bezug auf die Schutzrampe 154 angeordnet ist, wenn das Befestigungselement 100 durch Drehen entlang Drehrichtung bzw. Einschraubrichtung 170 drehend in einem Bauwerksegment 111 bzw. 113 gesetzt wird. Hierbei ist anzumerken, dass die Einschraubrichtung 170 durch die Gewinderichtung eines Verankerungsgewindes 116 definiert sein kann. Wie Figur 6 zu entnehmen ist, ist die als Rippe ausgebildete Schutzrampe 154 der Schutzeinrichtung 112 so angeordnet, dass sich der radial äußerste Abschnitt der Schutzrampe 154 in Setzrichtung an den Sensor 110 anschließt. Der Radius der Schutzrampe 154 nimmt dann ausgehend von dem zentrumsfernsten Punkt im Grenzbereich zu dem Sensor 110 kontinuierlich ab und mündet stetig in den Verjüngungsabschnitt 108. Durch diese Konfiguration befindet sich der Sensor 110 anschaulich in einem Abschirmungsbereich, der durch den achsenferneren und dem Sensor 110 zugewandten Bereich der Schutzrampe 154 definiert ist. Die Schutzrampe 154 kann zum Beispiel aus Metall hergestellt sein. Ohne Schutzrampen 154 kann es unter Umständen zu unerwünscht starken Kerbeffekten kommen. Das Vorsehen von einer oder mehreren Schutzrampen 154 kann zudem vorteilhaft bewirken, dass einen jeweiligen Sensor 110 umschließender Schaum der Schutzeinrichtung 112 sich an den ansonsten glatten Verjüngungsabschnitt 108 besser anlegt und besser anhaftet.

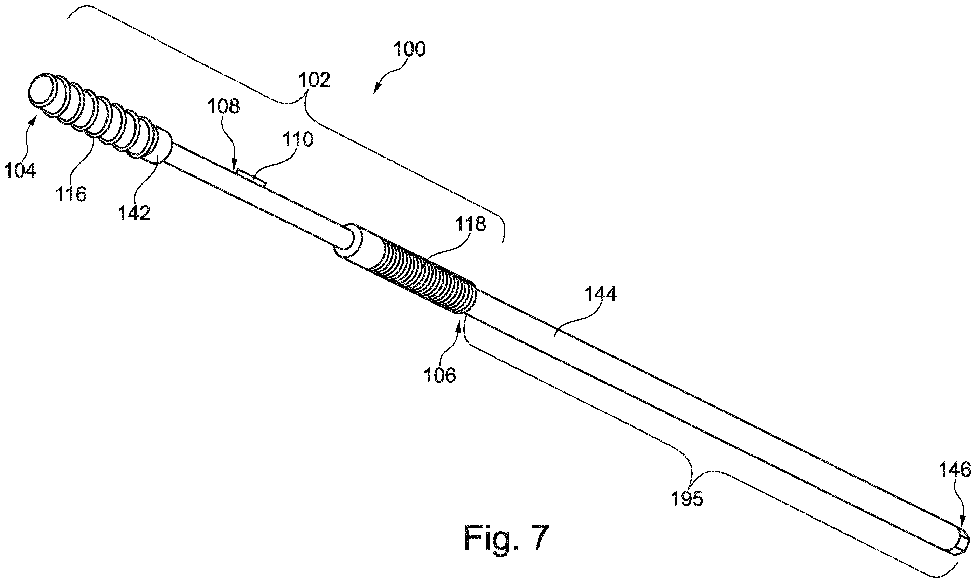

**Figur 7** zeigt ein Befestigungselement 100 für eine Bauwerkanordnung 120 gemäß einem anderen exemplarischen Ausführungsbeispiel der Erfindung.

Gemäß Figur 7 ist an dem zweiten Befestigungsende 106 des Schaftabschnitts 102 ein langgestreckter gewindefreier Bolzenabschnitt als Verlängerungsabschnitt 195 einstückig angeschlossen. Der Verlängerungsabschnitt 195 erstreckt sich ausgehend von dem metrischen Außengewinde 118 bis zu dem Kommunizierende 146 des Befestigungselements 100 hin. Somit weist gemäß Figur 7 das Befestigungselement 100 den dargestellten Verlängerungsabschnitt 195 auf, der sich ausgehend von dem zweiten Befestigungsende 106 des Schaftabschnitts 102 bis zu einem äußeren Ende des Befestigungselements 100 erstreckt, um dadurch das Befestigungselement 100 über das zweite Befestigungsende 106 des Schaftabschnitts 102 hinaus zu verlängern. Am metrischen Außengewinde 118 kann zum Beispiel eine (nicht gezeigte) Mutter montiert werden, um das Befestigungselement 100 an einem Bauwerksegment 111 bzw. 113 zu verspannen. Beispielsweise kann der Verlängerungsabschnitt 195 mehr als 20 % oder sogar mehr als die Hälfte der Gesamtlänge des Befestigungselements 100 ausmachen. Der langgestreckte Verlängerungsabschnitt 195 erlaubt es, das Befestigungselement 100 weit aus den miteinander verbundenen Bauwerksegmenten 111, 113 hervorstehen zu lassen. Dies kann zum Beispiel vorteilhaft sein, wenn am langgestreckten Verlängerungsabschnitt 195 eine andere (nicht gezeigte) Komponente angebracht werden soll. Alternativ oder ergänzend ist es möglich, einen Verlängerungsabschnitt 195 am ersten Befestigungsende 104 des Schaftabschnitts 102 anzubringen 104 (nicht gezeigt).

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Bauwerkanordnung (120), aufweisend:
ein erstes Bauwerksegment (111);
ein zweites Bauwerksegment (113) benachbart zu dem ersten Bauwerksegment (111); und
ein an dem ersten Bauwerksegment (111) und an dem zweiten Bauwerksegment (113) befestigtes Befestigungselement (100), das aufweist:
einen Schaftabschnitt (102);
ein erstes Befestigungsende (104) an einem ersten Ende des Schaftabschnitts (102), wobei das erste Befestigungsende (104) an dem ersten Bauwerksegment (111) befestigt ist;
ein zweites Befestigungsende (106) an einem zweiten Ende des Schaftabschnitts (102), wobei das zweite Befestigungsende (106) an dem zweiten Bauwerksegment (113) befestigt ist;
einen Sensor (110) zum Erfassen von Verankerungsdaten des Befestigungselements (100) an und/oder in dem ersten Bauwerksegment (111) und/oder dem zweiten Bauwerksegment (113), wobei der Sensor (110) an einem radial verjüngten Verjüngungsabschnitt (108) des Schaftabschnitts (102) axial zwischen dem ersten Befestigungsende (104) und dem zweiten Befestigungsende (106) angeordnet ist, wobei der radial verjüngte Verjüngungsabschnitt (108) als ringförmige Aussparung an einer radialen Außenseite des Schaftabschnitts ausgebildet ist;
eine Übertragungseinrichtung (114) zum Übertragen der Verankerungsdaten von dem Sensor (110) zu einem externen Empfängergerät (122); und
eine Schutzeinrichtung (112) zum Schützen des Sensors (110),
wobei
die Schutzeinrichtung (112) ein kompressibler Ring ist und umfänglich geschlossen in dem radial verjüngten Verjüngungsabschnitt (108) angeordnet ist.

2. Bauwerkanordnung (120) gemäß Anspruch 1, wobei der Sensor (110) zum Erfassen von Verankerungsdaten ausgebildet ist, die relative Informationen und/oder absolute Information betreffend einen Messparameter enthalten.

3. Bauwerkanordnung (120) gemäß einem der Ansprüche 1 bis 2, aufweisend zumindest eines der folgenden Merkmale:
wobei das erste Bauwerksegment (111) und/oder das zweite Bauwerksegment (113) aus einer Gruppe ausgewählt ist oder sind, die besteht aus einem Betonsegment, einem Holzsegment, einem Metallsegment und einem Tübbing;
ausgebildet als eines aus einer Gruppe, die besteht aus einem Gebäude, einer Brücke, einem Tunnel, einer Fahrbahn, einem Schutzzaun und einem Regal;
wobei die Übertragungseinrichtung (114) mindestens ein Übertragungskabel aufweist, das zumindest abschnittsweise entlang des Schaftabschnitts (102) verlaufend angeordnet ist;
wobei die Übertragungseinrichtung (114) zum drahtlosen Übertragen der Verankerungsdaten ausgebildet ist, insbesondere mittels zumindest einer Technologie aus einer Gruppe bestehend aus Near Field Communication, Bluetooth, Wireless Local Area Network, Narrowband Internet of Things, Long Term Evolution und Low Power Wide Area Network;
wobei der Sensor (110) zum Erfassen von zumindest einem Parameter aus einer Gruppe ausgebildet ist, die besteht aus Zugspannung, Dehnung, Drehmoment und Temperatur;
wobei der Sensor (110) einen Dehnmessstreifen aufweist;
aufweisend zumindest einen weiteren Sensor (110) zum Erfassen von weiteren Verankerungsdaten des Befestigungselements (100) in dem ersten Bauwerksegment (111) und/oder dem zweiten Bauwerksegment (113).

4. Bauwerkanordnung (120) gemäß einem der Ansprüche 1 bis 3, wobei die Schutzeinrichtung (112) kompressibles Material aufweist, insbesondere einen kompressiblen Schaum.

5. Bauwerkanordnung (120) gemäß einem der Ansprüche 1 bis 4, wobei die Schutzeinrichtung (112) ausgebildet ist, von in dem ersten Bauwerksegment (111) und/oder dem zweiten Bauwerksegment (113) auf den Verjüngungsabschnitt (108) mantelflächig einwirkende Kräfte von dem Sensor (110) abzuschirmen.

6. Bauwerkanordnung (120) gemäß Anspruch 1, aufweisend eines der folgenden Merkmale:
wobei die Schutzeinrichtung (112) mindestens eine Schutzrampe (154) aufweist, die bezogen auf eine Einschraubrichtung (170) des Befestigungselements (100) umfänglich hinter dem Sensor (110) angeordnet ist, insbesondere zumindest teilweise in dem radial verjüngten Verjüngungsabschnitt (108).

7. Bauwerkanordnung (120) gemäß einem der Ansprüche 1 bis 6, wobei das erste Befestigungsende (104) ein Verankerungsgewinde (116) aufweist, insbesondere ein Betonschraubengewinde, ein Holzschraubengewinde oder ein metrisches Gewinde.

8. Bauwerkanordnung (120) gemäß einem der Ansprüche 1 bis 7, wobei das zweite Befestigungsende (106) ein Außengewinde (118), insbesondere ein metrisches Außengewinde, aufweist.

9. Bauwerkanordnung (120) gemäß einem der Ansprüche 1 bis 8, aufweisend eines der folgenden Merkmale:
das Befestigungselement (100) ist ausgebildet als Holzschraube, insbesondere zur Durchsteckmontage;
das Befestigungselement (100) ist ausgebildet als Betonschraube, insbesondere zur Durchsteckmontage;
das Befestigungselement (100) ist ausgebildet als Bolzenanker, insbesondere als Betonanker;
das Befestigungselement (100) ist ausgebildet als Ankerstange, insbesondere für einen chemischen Dübel;
das Befestigungselement (100) ist ausgebildet als Kunststoffdübel, insbesondere für eine Holzschraube.

10. Bauwerkanordnung (120) gemäß einen der Ansprüche 1 bis 9, aufweisend das Empfängergerät (122), das zum Empfangen von mittels des Sensors (110) erfassten Verankerungsdaten kommunizierfähig mit dem Sensor (110) gekoppelt oder koppelbar ist.

11. Bauwerkanordnung (120) gemäß Anspruch 10, aufweisend zumindest eines der folgenden Merkmale:
wobei das Empfängergerät (122) zum drahtlosen Kommunizieren mit dem Sensor (110) ausgebildet ist;
wobei das Empfängergerät (122) aus einer Gruppe ausgewählt ist, die besteht aus einem Router, einem Computer und einem portablen Nutzer-Endgerät, insbesondere einem Smartphone oder einem Tablet.

12. Bauwerkanordnung (120) gemäß einem der Ansprüche 1 bis 11, aufweisend zumindest eines der folgenden Merkmale:
wobei das Befestigungselement (100) mindestens einen langgestreckten Verlängerungsabschnitt (195) aufweist, der sich ausgehend von zumindest einem des ersten Befestigungsendes (104) des Schaftabschnitts (102) und des zweiten Befestigungsendes (106) des Schaftabschnitts (102) bis zu einem Ende des Befestigungselements (100) erstreckt;
aufweisend eine Vielzahl, insbesondere mindestens fünf, von paarweise benachbarten Bauwerksegmenten (111, 113, 117) und eine Vielzahl von, insbesondere mindestens vier, benachbarte Bauwerksegmente (111, 113, 117) paarweise miteinander befestigenden Befestigungselementen (100), von denen jedes mit einem Sensor (110) und einer Übermittlungseinrichtung (114) zum Bereitstellen von setzortspezifischen Verankerungsdaten an das externe Empfängergerät (122) ausgebildet ist;
wobei der Sensor (110) in einem Grenzbereich zwischen dem ersten Bauwerksegment (111) und dem zweiten Bauwerksegment (113) positioniert ist, um Verankerungsdaten an einem Übergang zwischen dem ersten Bauwerksegment (111) und dem zweiten Bauwerksegment (113) zu erfassen.

13. Verfahren zum Herstellen einer Bauwerkanordnung (120), wobei das Verfahren aufweist:
Anordnen eines ersten Bauwerksegments (111) benachbart zu einem zweiten Bauwerksegment (113);
Befestigen eines Befestigungselements (100) an dem ersten Bauwerksegment (111) und an dem zweiten Bauwerksegment (113), wobei das Befestigungselement (100) folgendermaßen ausgebildet wird:
Ausbilden eines ersten Befestigungsendes (104) an einem ersten Ende eines Schaftabschnitts (102) des Befestigungselements (100), wobei das erste Befestigungsende (104) an dem ersten Bauwerksegment (111) befestigt wird;
Ausbilden eines zweiten Befestigungsendes (106) an einem zweiten Ende des Schaftabschnitts (102), wobei das zweite Befestigungsende (106) an dem zweiten Bauwerksegment (113) befestigt wird;
Anbringen eines Sensors (110) an dem Schaftabschnitt (102) zum Erfassen von Verankerungsdaten des Befestigungselements (100) an und/oder in dem ersten Bauwerksegment (111) und/oder dem zweiten Bauwerksegment (113), wobei der Sensor (110) an einem radial verjüngten Verjüngungsabschnitt (108) des Schaftabschnitts (102) axial zwischen dem ersten Befestigungsende (104) und dem zweiten Befestigungsende (106) angeordnet wird, wobei der radial verjüngte Verjüngungsabschnitt (108) als ringförmige Aussparung an einer radialen Außenseite des Schaftabschnitts ausgebildet wird;
Ausbilden einer Übertragungseinrichtung (114) zum Übertragen der Verankerungsdaten von dem Sensor (110) zu einem externen Empfängergerät (122); und
Ausbilden einer Schutzeinrichtung (112) zum Schützen des Sensors (110),
wobei
die Schutzeinrichtung (112) ein kompressibler Ring ist und umfänglich geschlossen in dem radial verjüngten Verjüngungsabschnitt (108) angeordnet wird.

## Claims

1. A building arrangement (120), comprising:
a first building segment (111);
a second building segment (113) adjacent to the first building segment (111); and
a fastener (100) attached to the first building segment (111) and the second building segment (113), comprising:
a shank portion (102);
a first attachment end (104) at a first end of the shank portion (102), wherein the first attachment end (104) is attached to the first building segment (111);
a second attachment end (106) at a second end of the shank portion (102), wherein the second attachment end (106) is attached to the second building segment (113);
a sensor (110) for sensing anchoring data of the fastener (100) on and/or in the first building segment (111) and/or the second building segment (113), wherein the sensor (110) is disposed on a radially tapered taper portion (108) of the shank portion (102) axially between the first attachment end (104) and the second attachment end (106), wherein the radially tapered taper portion (108) is formed as an annular recess on a radially outer side of the shank portion;
a transmitter (114) for transmitting the anchoring data from the sensor (110) to an external receiver device (122); and
protecting means (112) for protecting the sensor (110), wherein the protecting means (112) is a compressible ring and is disposed circumferentially closed in the radially tapered taper portion (108).

2. The building arrangement (120) according to claim 1, wherein the sensor (110) is configured for sensing anchoring data containing relative information and/or absolute information relating to a measurement parameter.

3. The building arrangement (120) according to any one of claims 1 to 2, comprising at least one of the following features:
wherein the first building segment (111) and/or the second building segment (113) is or are selected from a group consisting of a concrete segment, a wood segment, a metal segment and a concrete segment;
configured as one of a group consisting of a building, a bridge, a tunnel, a roadway, a protective fence and a shelf;
wherein the transmitter (114) comprises at least one transmission cable disposed at least partially extending along the shank portion (102);
wherein the transmitter (114) is configured for wirelessly transmitting the anchoring data, in particular by means of at least one technology from a group consisting of Near Field Communication, Bluetooth, Wireless Local Area Network, Narrowband Internet of Things, Long Term Evolution and Low Power Wide Area Network;
wherein the sensor (110) is configured for sensing at least one parameter from a group consisting of tensile stress, elongation, torque and temperature;
wherein the sensor (110) comprises a strain gauge;
comprising at least one further sensor (110) for sensing further anchoring data of the fastener (100) in the first building segment (111) and/or the second building segment (113).

4. The building arrangement (120) according to any one of claims 1 to 3, wherein the protecting means (112) comprises compressible material, in particular a compressible foam.

5. The building arrangement (120) according to any one of claims 1 to 4, wherein the protecting means (112) is configured to shield forces acting on an outer surface of the taper portion (108) in the first building segment (111) and/or the second building segment (113) from the sensor (110).

6. The building arrangement (120) according to claim 1, comprising one of the following features:
wherein the protecting means (112) comprises at least one protective ramp (154) disposed circumferentially behind the sensor (110) with respect to a screw-in direction (170) of the fastener (100), in particular at least partially in the radially tapered taper portion (108).

7. The building arrangement (120) according to any one of claims 1 to 6, wherein the first attachment end (104) comprises an anchoring thread (116), in particular a concrete screw thread, a wood screw thread or a metric thread.

8. The building arrangement (120) according to any one of claims 1 to 7, wherein the second attachment end (106) comprises an external thread (118), in particular a metric external thread.

9. The building arrangement (120) according to any one of claims 1 to 8, comprising one of the following features:
the fastener (100) is configured as a wood screw, in particular for push-through assembly;
the fastener (100) is configured as a concrete screw, in particular for push-through assembly;
the fastener (100) is configured as a bolt anchor, in particular as a concrete anchor;
the fastener (100) is configured as an anchor rod, in particular for a chemical dowel;
the fastener (100) is configured as a plastic dowel, in particular for a wood screw.

10. The building arrangement (120) according to any one of claims 1 to 9, comprising the receiver device (122), which is communicably coupled or coupleable to the sensor (110) for receiving anchoring data detected by means of the sensor (110).

11. The building arrangement (120) according to claim 10, comprising at least one of the following features:
wherein the receiver device (122) is configured for wirelessly communicating with the sensor (110);
wherein the receiver device (122) is selected from a group consisting of a router, a computer and a portable user terminal, in particular a smartphone or a tablet.

12. The building arrangement (120) according to any one of claims 1 to 11, comprising at least one of the following features:
wherein the fastener (100) comprises at least one elongated extension portion (195) extending from at least one of the first attachment end (104) of the shank portion (102) and the second attachment end (106) of the shank portion (102) to an end of the fastener (100);
comprising a plurality, in particular at least five, of building segments (111, 113, 117) adjacent in pairs and a plurality of fasteners (100), in particular at least four, of building segments (111, 113, 117) adjacent in pairs, each of which is configured with a sensor (110) and a transmitter (114) for providing site-specific anchoring data to the external receiver device (122);
wherein the sensor (110) is positioned in a boundary region between the first building segment (111) and the second building segment (113) in order to sense anchoring data at a transition between the first building segment (111) and the second building segment (113).

13. A method for manufacturing a building arrangement (120), the method com prising:
arranging a first building segment (111) adjacent to a second building segment (113);
attaching a fastener (100) to the first building segment (111) and the second building segment (113), wherein the fastener (100) is configured as follows:
forming a first attachment end (104) at a first end of a shank portion (102) of the fastener (100), wherein the first attachment end (104) is attached to the first building segment (111);
forming a second attachment end (106) at a second end of the shank portion (102), wherein the second attachment end (106) is attached to the second building segment (113);
attaching a sensor (110) to the shank portion (102) for sensing anchoring data of the fastener (100) on and/or in the first building segment (111) and/or the second building segment (113), wherein the sensor (110) is disposed on a radially tapered taper portion (108) of the shank portion (102) axially between the first attachment end (104) and the second attachment end (106), wherein the radially tapered taper portion (108) is formed as an annular recess on a radially outer side of the shank portion;
forming a transmitter (114) for transmitting the anchoring data from the sensor (110) to an external receiver device (122); and
forming a protecting means (112) for protecting the sensor (110), wherein the protecting means (112) is a compressible ring and is disposed circumferentially closed in the radially tapered taper portion (108).

## Revendications

1. Système de construction (120), présentant :
un premier segment de construction (111) ;
un second segment de construction (113) adjacent au premier segment de construction (111) ; et
un élément de fixation (100) fixé au premier segment de construction (111) et au second segment de construction (113), qui présente :
une partie tige (102) ;
une première extrémité de fixation (104) à une première extrémité de la partie tige (102), dans lequel la première extrémité de fixation (104) est fixée au premier segment de construction (111) ;
une seconde extrémité de fixation (106) à une seconde extrémité de la partie tige (102), dans lequel la seconde extrémité de fixation (106) est fixée au second segment de construction (113) ;
un capteur (110) permettant d'enregistrer des données d'ancrage de l'élément de fixation (100) sur et/ou dans le premier segment de construction (111) et/ou le second segment de construction (113), dans lequel le capteur (110) est agencé axialement entre la première extrémité de fixation (104) et la seconde extrémité de fixation (106) au niveau d'une section de rétrécissement (108) radialement rétrécie de la partie tige (102), dans lequel la section de rétrécissement (108) radialement rétrécie est réalisée sous la forme d'un évidement annulaire sur un côté extérieur radial de la partie tige ;
un dispositif de transmission (114) permettant de transmettre les données d'ancrage du capteur (110) vers un appareil récepteur externe (122) ; et
un dispositif de protection (112) permettant de protéger le capteur (110), dans lequel
le dispositif de protection (112) est un anneau compressible et est agencé de manière périphériquement fermée dans la section de rétrécissement (108) radialement rétrécie.

2. Système de construction (120) selon la revendication 1, dans lequel le capteur (110) est conçu pour enregistrer des données d'ancrage qui contiennent des informations relatives et/ou des informations absolues concernant un paramètre de mesure.

3. Système de construction (120) selon l'une quelconque des revendications 1 à 2, présentant au moins une des caractéristiques ci-dessous :
le premier segment de construction (111) et/ou le second segment de construction (113) est/sont sélectionné(s) dans un groupe constitué d'un segment de béton, d'un segment de bois, d'un segment de métal, et d'un tubage ;
ledit système de construction est réalisé sous la forme d'un système issu d'un groupe constitué d'un bâtiment, d'un pont, d'un tunnel, d'une chaussée, d'une clôture de protection et d'une étagère ;
le dispositif de transmission (114) comprend au moins un câble de transmission qui est agencé au moins par sections le long de la partie tige (102) ;
le dispositif de transmission (114) est conçu pour transmettre sans fil des données d'ancrage, en particulier au moyen d'au moins une technologie issue d'un groupe constitué de Near Field Communication, Bluetooth, Wireless Local Area Network, Narrowband Internet of Things, Long Term Evolution et Low Power Wide Area Network ;
le capteur (110) est conçu pour enregistrer au moins un paramètre issu d'un groupe constitué d'une tension, d'une déformation, d'un couple et température ;
le capteur (110) présente une jauge de déformation ;
ledit système de construction présente au moins un autre capteur (110) permettant d'enregistrer d'autres données d'ancrage de l'élément de fixation (100) dans le premier segment de construction (111) et/ou le second segment de construction (113).

4. Système de construction (120) selon l'une quelconque des revendications 1 à 3, dans lequel le dispositif de protection (112) présente un matériau compressible, en particulier une mousse compressible.

5. Système de construction (120) selon l'une quelconque des revendications 1 à 4, dans lequel le dispositif de protection (112) est conçu pour protéger le capteur (110) contre des forces s'exerçant dans le premier segment de construction (111) et/ou dans le second segment de construction (113) sur la surface périphérique de la section de rétrécissement (108).

6. Système de construction (120) selon la revendication 1, présentant au moins une des caractéristiques ci-dessous :
le dispositif de protection (112) présente au moins une rampe de protection (154) agencée derrière le capteur (110) de manière périphérique par rapport à une direction de vissage (170) de l'élément de fixation (100), en particulier au moins partiellement dans la section de rétrécissement (108) radialement rétrécie.

7. Système de construction (120) selon l'une quelconque des revendications 1 à 6, dans lequel la première extrémité de fixation (104) présente un filetage d'ancrage (116), en particulier un filetage de vis à béton, un filetage de vis à bois ou un filetage métrique.

8. Système de construction (120) selon l'une quelconque des revendications 1 à 7, dans lequel la seconde extrémité de fixation (106) présente un filetage extérieur (118), en particulier un filetage extérieur métrique.

9. Système de construction (120) selon l'une quelconque des revendications 1 à 8, présentant au moins une des caractéristiques ci-dessous :
l'élément de fixation (100) est réalisé sous la forme d'une vis à bois, en particulier en vue d'un montage traversant ;
l'élément de fixation (100) est réalisé sous la forme d'une vis à béton, en particulier en vue d'un montage traversant ;
l'élément de fixation (100) est réalisé sous la forme d'un boulon d'ancrage, en particulier sous la forme d'une ancre à béton ;
l'élément de fixation (100) est réalisé sous la forme d'une tige d'ancrage, en particulier destinée à une cheville chimique ;
l'élément de fixation (100) est réalisé sous la forme d'une cheville en plastique, en particulier destinée à une vis à bois.

10. Système de construction (120) selon l'une quelconque des revendications 1 à 9, présentant l'appareil récepteur (122) qui est couplé ou peut être couplé de manière à pouvoir communiquer avec le capteur (110) afin de recevoir des données d'ancrage enregistrées au moyen du capteur (110).

11. Système de construction (120) selon la revendication 10, présentant au moins une des caractéristiques ci-dessous :
l'appareil récepteur (122) est conçu pour communiquer sans fil avec le capteur (110) ;
l'appareil récepteur (122) est sélectionné dans un groupe constitué d'un routeur, d'un ordinateur et d'un terminal utilisateur portable, en particulier d'un smartphone ou une tablette.

12. Système de construction (120) selon l'une quelconque des revendications 1 à 11, présentant au moins une des caractéristiques ci-dessous consistant à :
l'élément de fixation (100) présente au moins une section de prolongement (195) allongée qui s'étend à partir d'au moins une parmi la première extrémité de fixation (104) de la partie tige (102) et la seconde extrémité de fixation (106) de la partie tige (102) jusqu'à une extrémité de l'élément de fixation (100) ;
ledit système de construction présente un grand nombre, en particulier au moins cinq, de segments de construction (111, 113, 117) voisins par paires et un grand nombre, en particulier au moins quatre, d'éléments de fixation (100) fixant ensemble par paires des segments de construction (111, 113, 117) voisins, chacun desdits éléments de fixation étant muni d'un capteur (110) et d'un dispositif de transmission (114) permettant de fournir à l'appareil récepteur externe (122) des données d'ancrage spécifiques au site d'installation ;
le capteur (110) est positionné dans une région limite entre le premier segment de construction (111) et le second segment de construction (113) afin d'enregistrer des données d'ancrage au niveau d'une transition entre le premier segment de construction (111) et le second segment de construction (113).

13. Procédé de fabrication d'un système de construction (120), le procédé comprenant les étapes consistant à :
agencer un premier segment de construction (111) de manière adjacente à un second segment de construction (113) ;
fixer un élément de fixation (100) au premier segment de construction (111) et au second segment de construction (113), dans lequel l'élément de fixation (100) est réalisé de la manière ci-dessous consistant à :
réaliser une première extrémité de fixation (104) au niveau d'une première extrémité d'une partie tige (102) de l'élément de fixation (100), dans lequel la première extrémité de fixation (104) est fixée au premier segment de construction (111) ;
réaliser une seconde extrémité de fixation (106) au niveau d'une seconde extrémité de la partie tige (102), dans lequel la seconde extrémité de fixation (106) est fixée au second segment de construction (113) ;
mettre en place au niveau de la partie tige (102) un capteur (110) permettant d'enregistrer des données d'ancrage de l'élément de fixation (100) sur et/ou dans le premier segment de construction (111) et/ou le second segment de construction (113), dans lequel le capteur (110) est agencé axialement entre la première extrémité de fixation (104) et la seconde extrémité de fixation (106) au niveau d'une section de rétrécissement (108) radialement rétrécie de la partie tige (102), dans lequel la section de rétrécissement (108) radialement rétrécie est réalisée sous la forme d'un évidement annulaire sur un côté extérieur radial de la partie tige ;
réaliser un dispositif de transmission (114) permettant de transmettre les données d'ancrage du capteur (110) vers un appareil récepteur externe (122) ; et
réaliser un dispositif de protection (112) permettant de protéger le capteur (110),
dans lequel le dispositif de protection (112) est un anneau compressible et est agencé de manière périphériquement fermée dans la section de rétrécissement (108) radialement rétrécie.
